# EUROPÄISCHE PATENTSCHRIFT

(11) **EP 4 698 104 B1**
(45) Veröffentlichungstag und Bekanntmachung des Hinweises auf die Patenterteilung: **07.10.2026**
(21) Anmeldenummer: 24718498.9
(22) Anmeldetag: 12.04.2024
(51) Int. Cl.: A61C 13/00, A61C 13/10, A61C 13/267

(54) **VERFAHREN ZUR HERSTELLUNG EINER DENTALEN TEILPROTHESE MIT TRÄGERSTRUKTUR**
METHOD FOR PRODUCING A DENTAL PARTIAL PROSTHESIS HAVING A SUPPORT STRUCTURE
PROCÉDÉ DE FABRICATION DE PROTHÈSE DENTAIRE PARTIELLE À STRUCTURE DE SUPPORT

(30) Priorität: 17.04.2023 DE 102023109570
(43) Veröffentlichungstag der Anmeldung: 25.02.2026
(73) Patentinhaber: Kulzer GmbH, 63450 Hanau (DE)
(72) Erfinder: STANGE, Frank-Uwe, 88085 Langenargen (DE); MÖLLER, Matthias, 88097 Eriskirch (DE); RENZ, Karl-Heinz, 63820 Elsenfeld (DE)
(74) Vertreter: Kilian Kilian & Partner mbB
(86) Internationale Anmeldenummer: PCT/EP2024/059988
(87) Internationale Veröffentlichungsnummer: WO 2024/218004

(56) Entgegenhaltungen:
- EP-A1- 4 389 063
- EP-A1- 4 389 063
- US-A1- 2013 101 962
- US-A1- 2013 101 962
- US-A1- 2014 272 796
- US-A1- 2014 272 796
- US-A1- 2015 245 892
- US-A1- 2015 245 892
- US-A1- 2020 015 944
- US-A1- 2020 015 944
- US-A1- 2021 015 592
- US-A1- 2021 015 592

## Beschreibung

Die Erfindung betrifft ein Verfahren zur Herstellung einer dentalen Teilprothese, wobei die dentale Teilprothese zumindest einen Prothesenzahn, eine Prothesenbasis und eine Trägerstruktur aufweist, wobei die Prothesenbasis einen zahnfleischfarbenen Kunststoff aufweist, sowie eine solche dentale Teilprothese hergestellt mit einem solchen Verfahren und eine Vorrichtung zur Herstellung einer solchen dentalen Teilprothese mit einer Trägerstruktur.

Dentale Teilprothesen, auch als dentaler teilprothetischer Zahnersatz bezeichnet, dienen zur Ergänzung noch bestehender Restbezahnung. Neben dem zahnfarbenen und zahnfleischfarbenen Anteil der Teilprothesen wird zusätzlich eine Trägerstruktur als Stütz- oder Haltestruktur beziehungsweise als tragende Komponente der Funktionselemente benötigt. Traditionell wird beispielweise mit metallischen Modellgüssen gearbeitet, an die im analogen Verfahren Prothesenkunststoff und Prothesenzähne angefügt werden.

Neben handwerklichen Techniken gewinnen digitale Fertigungsmethoden auch im Dentalbereich immer mehr an Bedeutung. Zahnersatz, wie zum Beispiel Dentalprothesen (Teilprothesen und Vollprothesen), Kronen, Brücken und Aufbissschienen, werden seit einigen Jahren mittels CAD/CAM-Technologien subtraktiv in Fräsverfahren hergestellt (CAM - Computer-Aided Manufacturing, Deutsch: rechnerunterstützte Fertigung, CAD - Computer-Aided Design, Deutsch: rechnerunterstützte Konstruktion). Auch bei der Herstellung und dem Entwurf von dentalen Teil- und Vollprothesen mit Prothesenbasis zur Auflage auf der Gingiva und darin befestigten oder angeordneten Prothesenzähnen, werden zunehmend CAD/CAM-Verfahren angewendet.

Digitale Verfahren erlauben die Herstellung der Trägerstrukturen mittels subtraktiver Fertigungsverfahren, z. B. Fräsverfahren, oder additiver Fertigungsverfahren, z. B. Sinterprozessen. Ebenfalls können zahnfarbene oder auch zahnfleischfarbene Elemente digital vorgefertigt werden.

Im Rahmen des digitalen Designs von prothetischen Arbeiten, insbesondere von dentalen Teil- oder Totalprothesen wird die Konstruktion in einen "weißen" oder zahnfarbenen Zahnanteil (der Prothesenzahn oder die Prothesenzähne) und einen zahnfleischfarbenen ("rosa") Prothesenbasisanteil (die Prothesenbasis) aufgegliedert. Dentale Teilprothesen bestehen folglich aus einer zahnfleischfarbenen beziehungsweise rosafarbenen Prothesenbasis und zahnfarbenen Anteilen (Prothesenzahn, Prothesenzähne oder Zahnsegmente).

Es gibt Verfahren, wie beispielsweise die aus der DE 10 2009 056 752 A1 oder der WO 2013/124 452 A1 bekannten Verfahren, bei denen eine dentale Teil- beziehungsweise Totalprothese digital aufgestellt und über CAD/CAM-Verfahren produziert wird. Aus dem Patent DE 103 04 757 B4 ist ein Verfahren zur Herstellung von Zahnersatz bekannt, bei dem eine virtuelle Aufstellung der Prothesenzähne in ein virtuelles Modell erfolgt und die Herstellung einer Prothesenbasis auf der Basis des virtuellen Modells erfolgt. Die EP 2 742 906 A1 offenbart ein Verfahren, bei dem ein Zahnbogen mit einer Abformmasse verbunden wird, wobei die Abformmasse in einem individualisierten Abformlöffel enthalten ist und einen Abdruck der Mundraumsituation des Patienten enthält. Die Oberfläche der Form mit dem Zahnbogen wird digitalisiert und anschließend rechnerisch ein virtuelles Modell des Zahnbogens möglichst passend in dem virtuellen Modell der Prothesenbasis positioniert und orientiert.

Im Rahmen der digitalen Totalprothetik oder Teilprothetik werden Prothesenzähne oder Zahnformkörper benötigt, die sich eindeutig und reproduzierbar mit der Prothesenbasis verkleben lassen.

Die US 2021/205055 A1 offenbart ein Verfahren zur Herstellung eines herausnehmbaren Zahnersatzes, der in verschiedenen Teilen gefertigt wird, die über einen Rahmen miteinander verbunden werden. Aus der WO 2020/178195 A1 ist ein Verfahren zum Herstellen eines dentalen Formkörpers bekannt, bei dem Schlüsselstrukturen zur eindeutigen relativen Positionierung verwendet werden, um mehrfarbige dentale Formkörper zu erzeugen. Die nicht vorveröffentlichte WO 2023/088831 A1 offenbart ein computerimplementiertes Verfahren zur Bereitstellung einer Schablone für eine Gussmatrix, die zum Gießen eines oder mehrerer künstlicher Zahnfleischteile einer herausnehmbaren Prothese vorgesehen ist. Die Gussmatrix umfasst Aussparungen deren Form ein Negativ einer geometrischen 3D-Form eines Ausschnitts des herausnehmbaren Zahnersatzes mit einem der zu gießenden künstlichen Zahnfleischteile ist.

Die WO 2016/091 762 A1 offenbart ein Verfahren zur Herstellung einer Dentalprothese, bei dem eine Schablone erzeugt wird, mit der mehrere Prothesenzähne in der gewünschten Lage und Orientierung zueinander an einer Prothesenbasis befestigt werden können. Die Prothesenzähne werden dabei durch basales Schleifen in einem zervikalen Bereich eingekürzt, um die gewünschte Bisshöhe herzustellen. Die WO 2016/110 392 A1 offenbart ein Verfahren zur Herstellung einer Dentalprothese, bei dem ein plastisch verformbares Verbindungsmittel in Zahnfächer einer Prothesenbasis eingebracht wird, um eine manuelle Korrektur der Ausrichtung der Prothesenzähne in der Prothesenbasis zu ermöglichen. Aus der DE 10 2008 019 694 B3 ist ein Verfahren und eine Einrichtung zur Herstellung dentaler Formkörper aus Keramik mit einem Laser bekannt. Aus der EP 2 571 451 B1 und der EP 2 666 438 A2 sind Verfahren zur Herstellung von Dentalprothesen bekannt, bei denen vorkonfektionierte Prothesenzähne in einer Halterung in Wachs eingebettet werden und anschließend zervikal mittels CAM-Verfahren abgefräst werden. Es ist notwendig, die Prothesenzähne basal (beziehungsweise zervikal) zu kürzen, um die Zahnhöhe an den Kiefer des Patienten anzupassen, also um die Bisshöhe der Dentalprothese passend zu den Bedürfnissen des Patienten einzustellen. Die WO 2014/159 436 A1 offenbart eine geschichtete Dentalprothese mit einer Verstärkung in der Prothesenbasis, die in einen basalen Hohlraum eingegossen wird.

Sowohl bei der additiven Fertigung wie auch bei der subtraktiven Fertigung stellen die Verbindung von Prothesenbasis und zahnfarbenen Anteilen (Prothesenzähnen) eine erhebliche Herausforderung dar. Ein kritischer Aspekt ist also nach wie vor die Verbindung der digital gefertigten Teile untereinander, insbesondere auch im Hinblick auf die Präzision der Anordnung zueinander. Eine Verklebung, auch unter Verwendung von Positionierhilfen wie Fixierschlüsseln, führt immer zu einer mehr oder weniger starken Fehlpassung die manuell von Behandler korrigiert werden muss. Die Verbindung erfolgt in der Regel durch Verkleben, wobei die Qualität der Übergänge durch die Verwendung von zu wenig oder von zu viel Kleber wie auch die korrekte Positionierung der Prothesenzähne bei der Verklebung fehlerträchtig sind. Ebenfalls verfügbare einteilige zweifarbige (zahnfleischfarbene und zahnfarbene) Fräsrohlinge verfügen zwar über eine sehr gute Verbindung der Schichten, jedoch ist die Ästhetik aufgrund der vorgegebenen Phasengrenzen stets ein Kompromiss und damit unbefriedigend.

Für die Herstellung digital designter dentaler Teilprothesen bestehen gemäß Stand der Technik folgende Möglichkeiten: 1. Fräsen oder Sintern der Trägerstrukturen, Fräsen oder Drucken von Prothesenbasis und/oder Prothesenzähnen (zahnfarbenen Anteilen) mit nachfolgender analoger Verklebung der Teile einerseits und 2. vollanaloges Design der Gerüststrukturen auf dem Modell, Herstellung eines metallischen Modellgusses mit Komplettierung auf dem Modell auf Basis einer Wachsaufstellung der Funktionsbereiche andererseits.

Aus der US 2015/245892 A1 ist ein Verfahren zur Herstellung einer Dentalprothese bekannt, bei dem zuerst eine Zahnschmelzschicht und die Prothesenzähne hergestellt werden und am Ende die Prothesenbasis. Die US 2013/0101962 A1 offenbart ein Verfahren zur Herstellung einer Dentalprothese, wobei bei dem Verfahren mehrere Vertiefungen entlang eines Zahnbogens in einen Block gefräst werden, wobei in die Vertiefungen mehrere Kunststoffe eingefüllt wird und zwischendurch aus den in den Vertiefungen ausgehärteten Kunststoffen die Prothesenzähne gefertigt werden. Der Block wird anschließend weitgehend abgetragen und aus dem Block die Prothesenbasis gefertigt. Es handelt sich bei dem Verfahren um ein mehrstufiges Fräsverfahren. Nachteilig kann bei dem Verfahren nach der US 2013/0101962 A1 der große Materialverlust und die beim Abtragen des Materials des Blocks benötigte Zeit sein sowie der Verschleiß der hierfür benötigten Werkzeuge. Eine Trägerstruktur ist nicht vorgesehen und müsste wie bei analogen Verfahren zusätzlich an die Prothesenbasis angebracht werden. Aus der EP 2 915 503 B1 ist ein umgekehrtes Verfahren zur Herstellung einer Dentalprothese bekannt, bei dem ein Fräsrohling aus einem Zahnschmelzmaterial subtraktiv bearbeitet wird, um einen Hohlraum zu erzeugen, der als Negativform für eine Prothesenbasis einer Dentalprothese verwendet wird. Anschließend werden die okklusale Seite und die basale Seite der Dentalprothese subtraktiv aus dem so entstandenen Verbund hergestellt. Auch dies ist ein mehrstufiges Fräsverfahren. Nachteilig kann bei einem Verfahren nach der EP 2 915 503 B1 sein, dass sehr große Mengen des relativ harten Zahnschmelzmaterials und der anderen Materialien entfernt werden müssen, um die Dentalprothesen zu fertigen. Damit könnte dann nicht nur der Verlust einer großen Menge des Zahnschmelzmaterials und der anderen Materialien einhergehen, sondern die Fräswerkzeuge können intensiv beansprucht werden und der Zeitaufwand zum Umsetzen des Verfahrens wäre relativ groß. Auch bei diesem Verfahren ist keine Trägerstruktur vorgesehen und diese müsste wie bei analogen Verfahren zusätzlich an die Prothesenbasis angebracht werden.

Wenn ein mehrstufiger Prozess gewählt wird, bei dem die Prothesenzähne und/oder die Prothesenbasis aus mehreren unterschiedlichen Materialien gefertigt werden soll, potenziert sich der Materialverbrauch und damit der Zeitaufwand und die Werkzeugbeanspruchung hierdurch erneut.

Des Weiteren können bei nicht vollständiger Entfernung des Zahnschmelzmaterials von den Außenseiten (der okklusalen und oralen Seite) der Prothesenbasis ästhetisch störende weiße beziehungsweise zahnfarbene Reste verbleiben, die anschließend manuell vom Zahntechniker entfernt werden müssen. Dadurch kann es wiederum zu einer ungewollten Verdünnung der Materialstärke der Prothesenbasis kommen.

Ferner kann an herkömmlichen Verfahren nachteilig sein, dass entweder die Prothesenzähne oder die Prothesenbasis aus gießfähigen Kunststoffen wie PMMA basierten Werkstoffen gefertigt werden müssen. Dies schränkt die Materialauswahl ein.

Für die Herstellung digital designter dentaler Teilprothesen bestehen im Stand der Technik folgende Möglichkeiten:
1. Fräsen oder Drucken der zahnfleischfarbenen Prothesenbasis und Verkleben mit künstlichen Prothesenzähnen, alternativ mit gefrästen oder gedruckten zahnfarbenen Segmenten. Nachteile hierbei können sein: Ungenauigkeit der Fertigung, Zeitaufwand, ästhetische Herausforderungen aufgrund Kleberüberschüssen beziehungsweise Unterfüllung von Randspalten, Limitierungen bezüglich der Fräsbarkeit von Kavitäten aufgrund von Hinterschneidungen.
2. Fräsen von vorgefertigten Frässcheiben mit integrierter zweiphasiger Struktur. Dabei kann versucht werden, durch geschickte Anordnung der Übergänge eine natürliche Ästhetik zu erreichen. Nachteilig ist hierbei die Lage der Übergänge von zahnfleischfarben zu zahnfarben, die immer einen Kompromiss darstellt und ästhetisch unbefriedigend ist.
3. Fräsen von vorgeformten Formkörpern, in die vorkonfektionierte Prothesenzähne bereits integriert sind. Hauptsächlich wird bei diesen Verfahren nur die basale Seite der dentalen Teilprothese noch individuell angefertigt. Nachteilig ist hieran, dass die Kompatibilität mit individuellen Patientenfällen äußerst limitiert ist und viele Varianten von vorgeformten Formkörpers vorzuhalten sind.
4. Schichtweiser Aufbau einer dentalen Teilprothese bestehend aus zahnfarbenen Einzelschichten und einer Prothesenbasis durch mehrmaliges Fräsen und Wiederbefüllen der ausgefrästen Kavitäten. Nachteilig sind hieran der große Materialverlust und der Zeitaufwand.

Eine Aufgabe der Erfindung besteht darin, wenigstens einen Nachteil oder mehrere Nachteile des Stands der Technik zumindest teilweise zu überwinden. Insbesondere soll eine Möglichkeit gefunden werden, ein Verfahren zur Herstellung einer dentalen Teilprothese mit Trägerstruktur, eine dentale Teilprothese mit Trägerstruktur und eine Vorrichtung zur Herstellung einer dentalen Teilprothese mit Trägerstruktur aus zumindest drei unterschiedlichen und miteinander fest verbundenen Materialien bereitzustellen, mit denen eine schnelle und ressourcenschonende Herstellung mittels subtraktiver CAM-Verfahren und gegebenenfalls zusätzlich additiver CAM-Verfahren möglich ist. Gemäß einem ersten möglichen Aspekt kann bei dem Verfahren möglichst wenig Material sowohl von dem Material für die Prothesenzähne als auch von dem Material für die Prothesenbasis entfernt werden müssen. Die Herstellung kann weitgehend basierend auf digitalen Fertigungstechniken erfolgen. Insbesondere sollen die zumindest drei Materialien im Rahmen des Verfahrens aneinandergefügt werden können. Die Materialauswahl soll möglichst frei sein. Insbesondere kann es sinnvoll sein, zu vermeiden, dass die Prothesenzähne und die Prothesenbasis vollständig aus einem ausgehärteten und zuvor flüssigen Kunststoff bestehen. Das Verfahren soll für den Zahntechniker möglichst einfach und unaufwendig umsetzbar sein. Insbesondere sollen nach Möglichkeit vollautomatisierte oder möglichst weitgehend automatisierte Techniken wie CAD/CAM-Technologien genutzt werden und nutzbar sein.

Einen Beitrag zur zumindest teilweisen Erfüllung zumindest einer der vorgenannten Aufgaben leisten die Merkmale der unabhängigen Ansprüche 1, 13 und 14. Die abhängigen Ansprüche 2 bis 12 und 15 stellen bevorzugte Ausführungsformen bereit, die zur zumindest teilweisen Erfüllung zumindest einer der Aufgaben beitragen. Zur zumindest teilweisen Lösung der Aufgaben leistet folglich ein Verfahren nach Anspruch 1, eine dentale Teilprothese nach Anspruch 13 und Vorrichtung nach Anspruch 14 zumindest einen Beitrag. Bevorzugte Varianten werden mit den Unteransprüchen 2 bis 12 und 15 beansprucht.

Die Aufgaben der Erfindung werden also zumindest teilweise oder beitragsweise gelöst durch ein Verfahren zur Herstellung einer dentalen Teilprothese, wobei die dentale Teilprothese zumindest einen Prothesenzahn, eine Prothesenbasis und eine Trägerstruktur aufweist, wobei die Prothesenbasis einen zahnfleischfarbenen Kunststoff aufweist und wobei der zumindest eine Prothesenzahn, die Prothesenbasis und die Trägerstruktur bei dem Verfahren fest miteinander verbunden werden, wobei das Verfahren durch die folgenden Schritte gekennzeichnet ist
A) Digitale Konstruktion eines virtuellen dreidimensionalen Modells der dentalen Teilprothese mit oder ohne die Trägerstruktur oder Anwenden eines vorhandenen virtuellen dreidimensionalen Modells der dentalen Teilprothese mit oder ohne der Trägerstruktur;
B1) Erzeugen eines virtuellen dreidimensionalen Modells des zumindest einen Prothesenzahns, eines virtuellen dreidimensionalen Modells der Prothesenbasis und eines virtuellen dreidimensionalen Modells der Trägerstruktur anhand des virtuellen dreidimensionalen Modells der dentalen Teilprothese mit Trägerstruktur, so dass das virtuelle dreidimensionale Modell des zumindest einen Prothesenzahns, das virtuelle dreidimensionale Modell der Prothesenbasis und das virtuelle dreidimensionale Modell der Trägerstruktur voneinander separate Teilvolumen des virtuellen dreidimensionalen Modells der dentalen Teilprothese ergeben, oder
B2) Erzeugen eines virtuellen dreidimensionalen Modells des zumindest einen Prothesenzahns und eines virtuellen dreidimensionalen Modells der Prothesenbasis anhand des virtuellen dreidimensionalen Modells der dentalen Teilprothese, so dass das virtuelle dreidimensionale Modell des zumindest einen Prothesenzahns und das virtuelle dreidimensionale Modell der Prothesenbasis voneinander separate Teilvolumen des virtuellen dreidimensionalen Modells der dentalen Teilprothese ergeben;
C1) Herstellen der Trägerstruktur anhand des virtuellen dreidimensionalen Modells der Trägerstruktur mit einem CAM-Verfahren oder
C2) Herstellen der Trägerstruktur mit einem analogen Verfahren durch Anpassung an einem physischen Modell des Mundraums des Patienten und Einscannen der Oberfläche der analog hergestellten Trägerstruktur und Erzeugen eines virtuellen dreidimensionalen Modells der Trägerstruktur aus dem Scan der Oberfläche der analog hergestellten Trägerstruktur, wobei das aus dem Scan erzeugte virtuelle dreidimensionale Modell der Trägerstruktur durch digitale Bearbeitung zu dem virtuellen dreidimensionalen Modell der dentalen Teilprothese ohne Trägerstruktur ergänzt wird und bereichsweise von dem virtuellen dreidimensionalen Modell des zumindest einen Prothesenzahns subtrahiert wird oder bereichsweise von dem virtuellen dreidimensionalen Modell des zumindest einen Prothesenzahns und von dem virtuellen dreidimensionalen Modell der Prothesenbasis bereichsweise subtrahiert wird;
D) Bereitstellen eines Fräskörpers zur Herstellung des zumindest einen Prothesenzahns, wobei der Fräskörper aus einem für Prothesenzähne geeigneten Material besteht;
E) Herstellen einer Verbindungsoberfläche zwischen dem zumindest einen Prothesenzahn und einer Stützstruktur zur Positionierung der Trägerstruktur einerseits und der Prothesenbasis und der Trägerstruktur andererseits in einer Oberfläche des Fräskörpers mit Hilfe eines subtraktiven CAM-Verfahrens nach Maßgabe des virtuellen dreidimensionalen Modells des zumindest einen Prothesenzahns, des virtuellen dreidimensionalen Modells der Prothesenbasis und des virtuellen dreidimensionalen Modells der Trägerstruktur;
F) nach Schritt E) Anordnen oder Befestigen der Trägerstruktur an der Verbindungsoberfläche des Fräskörpers;
G) nach Schritt F) Einfüllen zumindest eines fluiden polymerisierbaren Kunststoffs auf Bereiche der Verbindungsoberfläche und in das in Schritt E) abgetragene Volumen in der Oberfläche des Fräskörpers;
H) nach Schritt G) Aushärten oder Teilhärten des zumindest einen fluiden polymerisierbaren Kunststoffs, wobei beim Aushärten ein ausgehärtetes Kunststoffmaterial entsteht oder beim Teilhärten ein teilweise polymerisiertes Kunststoffmaterial entsteht, wobei das ausgehärtete Kunststoffmaterial oder das teilweise polymerisierte Kunststoffmaterial die Trägerstruktur und das Material des Fräskörpers miteinander verbindet; und
I) nach Schritt H) subtraktives Bearbeiten des ausgehärteten oder teilweise polymerisierten Kunststoffmaterials und des Fräskörpers mit einem CAM-Verfahren nach Maßgabe des virtuellen Modells einer äußeren Oberfläche der dentalen Teilprothese, so dass die dentale Teilprothese aufweisend die Trägerstruktur, das ausgehärtete oder teilweise polymerisierte Kunststoffmaterial und das Material des Fräskörpers subtraktiv herausgearbeitet wird.

Nach dem Herausarbeiten der dentalen Teilprothese in Schritt I) können noch Stege zur Befestigung der dentalen Teilprothese in einer Halterung der verwendeten CAM-Vorrichtung vorhanden sein. Diese Stege können in einem nachfolgenden Schritt entfernt werden.

Das Anwenden eines vorhandenen virtuellen dreidimensionalen Modells der dentalen Teilprothese kann beispielsweise und erfindungsgemäß bevorzugt dadurch erfolgen, dass die CAD-Daten des virtuelles dreidimensionalen Modells der dentalen Teilprothese zur Datenverarbeitung eingelesen werden. Zum Einlesen kann das bereits vorhandene und also zuvor digital konstruierte virtuelle dreidimensionale Modell der dentalen Teilprothese per Fernübertragung über das Internet, über eine Funkverbindung wie Bluetooth oder von einem Datenträger geladen werden.

Dentale Teilprothesen sind Prothesen, die einen fehlenden Zahn oder mehrere fehlende Zähne aber nicht alle Zähne im Mundraum eines Patienten ersetzen, um die Funktion und das ästhetische Erscheinungsbild wiederherzustellen. Im Unterschied zu einer dentalen Vollprothese werden nur einige der im Mundraum vorhandenen Zähne ersetzt und nicht alle.

Solche dentalen Teilprothesen weisen zumindest einen Prothesenzahn, eine Prothesenbasis und eine Trägerstruktur auf. Bevorzugt besteht die erfindungsgemäße dentale Teilprothese aus dem zumindest einen Prothesenzahn, der Prothesenbasis und der Trägerstruktur.

Die Trägerstruktur kann eine reine Haltestruktur sein, mit der die dentale Teilprothese an vorhandenen Strukturen wie Zähnen und/oder Implantaten im Mundraum befestigt wird.

Die Trägerstruktur dient zur Befestigung der dentalen Teilprothese im Mundraum und insbesondere an noch vorhandenen Zähnen im Mundraum des Patienten. Wenn die dentale Teilprothese aus mehreren Teilen besteht, dient die Trägerstruktur bevorzugt auch zusätzlich dazu, die Teile der dentalen Teilprothese aneinander zu befestigen.

Die Trägerstruktur kann eine oder mehrere Retentionen aufweisen, die im Inneren der Prothesenbasis angeordnet ist / sind beziehungsweise wird / werden. Die Retentionen dienen der mechanischen Stabilisierung des Aufbaus der dentalen Teilprothese.

Die Trägerstruktur kann zumindest eine Klammer aufweisen, wobei die dentale Teilprothese mit der zumindest einen Klammer an zumindest einem Zahn im Mundraum des Patienten befestigt werden kann.

Dass der zumindest eine fluide polymerisierbare Kunststoff auf Bereiche der Verbindungsoberfläche gefüllt wird, bedeutet, dass zumindest die nicht von der Trägerstruktur abgedeckten Bereiche der Verbindungsoberfläche, also die nicht zur Stützstruktur gehörenden Bereiche der Verbindungsoberfläche, mit dem zumindest einen polymerisierbaren Kunststoff in Kontakt kommen, bevorzugt von dem zumindest einen polymerisierbaren Kunststoff benetzt werden.

Die Stützstruktur stellt eine Oberfläche dar, die an einer Oberfläche der Trägerstruktur anliegt und die die Positionierung der Trägerstruktur relativ zu dem zumindest einen Prothesenzahn festlegt. Dabei wird insbesondere ein Einfüllen des zumindest einen fluiden polymerisierbaren Kunststoffs auch in die Zwischenräume ermöglicht. Die Stützstruktur kann sich unmittelbar von dem zumindest einen Prothesenzahn aus der Oberfläche erstrecken, die eine Verbindung des zumindest einen Prothesenzahns mit der Prothesenbasis darstellt. Alternativ oder zusätzlich kann die Stützstruktur auch getrennt von dem zumindest einen Prothesenzahn vorliegen, beispielsweise im Bereich einer Gaumenplatte der dentalen Teilprothese. Ferner ist es alternativ oder ebenfalls zusätzlich möglich, dass die Trägerstruktur unmittelbar von einer Oberfläche des zumindest einen Prothesenzahns gestützt wird, so dass die Stützstruktur ein Teil der Oberfläche des zumindest einen Prothesenzahns ist, vorzugsweise ein Teil der Oberfläche des zumindest einen Prothesenzahns der zur Prothesenbasis hin ausgerichtet ist. Ist die Stützstruktur nicht innerhalb des Volumens des virtuellen dreidimensionalen Modells der Prothesenbasis angeordnet, dann ist sie einen Teil der Oberfläche des virtuellen dreidimensionalen Modells der Trägerstruktur. Derartige Stützstrukturen außerhalb des Volumens der Prothesenbasis werden (gegebenenfalls bis auf Stege zur Befestigung der dentalen Teilprothese in einer Halterung der verwendeten CAM-Vorrichtung) in Schritt I) vollständig entfernt. Insbesondere soll bei der fertigen physischen dentalen Teilprothese kein Material des Fräskörpers zur Herstellung des zumindest einen Prothesenzahns von der Prothesenbasis isoliert oder als Trägerstruktur außerhalb des virtuellen dreidimensionalen Modells der dentalen Teilprothese an der Trägerstruktur der dentalen Teilprothese verbleiben. Alle die Trägerstruktur bildenden Vorsprünge und Stege, die nicht vollständig innerhalb des Volumens der Prothesenbasis angeordnet sind, werden also in Schritt I), sofern diese nicht zu Stegen zur Befestigung der dentalen Teilprothese in einer Halterung der verwendeten CAM-Vorrichtung gehören, oder spätestens nach Schritt I), wenn diese zu Stegen zur Befestigung der dentalen Teilprothese in einer Halterung der verwendeten CAM-Vorrichtung gehören, entfernt.

Die Verbindungsoberfläche umfasst folglich alle Oberflächen oder besteht folglich aus allen Oberflächen, die den zumindest einen Prothesenzahn mit der Prothesenbasis verbinden sollen, und der Oberfläche der Stützstruktur, die die Trägerstruktur hält und dabei relativ zu dem zumindest einen Prothesenzahn positioniert.

Zwei beziehungsweise drei separate Teilvolumen im Sinne der vorliegenden Erfindung stellen zwei beziehungsweise drei voneinander getrennte Teile des Volumens des dreidimensionalen virtuellen Modells der dentalen Teilprothese dar, die keinen Überlapp haben. Separate Teilvolumen haben also keine gemeinsamen Volumenanteile.

Ein analoges Verfahren zum Herstellen der Trägerstruktur stellt im Gegensatz zu einem digitalen Verfahren ein Verfahren dar, bei dem mit handwerklichen Maßnahmen und/oder Schritten am Patienten eine Anpassung an die Mundraumsituation des Patienten erfolgt. Es reicht vorliegend für ein analoges Verfahren aus, wenn zumindest einer der Verfahrensschritte zum Herstellen der Trägerstruktur analog abläuft, wobei andere Schritte auch eine digitale Konstruktion umfassen können.

Unter einem bereichsweisen subtrahieren des aus dem Scan erzeugten virtuellen dreidimensionalen Modells der Trägerstruktur von dem virtuellen dreidimensionalen Modell des zumindest einen Prothesenzahns oder von dem virtuellen dreidimensionalen Modell des zumindest einen Prothesenzahns und von dem virtuellen dreidimensionalen Modell der Prothesenbasis ist zu verstehen, dass ein Teil des Volumens des aus dem Scan erzeugten virtuellen dreidimensionalen Modells der Trägerstruktur in dem Volumen des virtuellen dreidimensionalen Modells des zumindest einen Prothesenzahns oder in dem Volumen des virtuellen dreidimensionalen Modells des zumindest einen Prothesenzahns und/oder in dem Volumen des virtuellen dreidimensionalen Modells der Prothesenbasis angeordnet ist und von dem oder von den virtuellen dreidimensionalen Modell(en) des zumindest einen Prothesenzahns beziehungsweise der Prothesenbasis rechnerisch entfernt wird und daher subtrahiert wird. Dadurch werden das virtuelle dreidimensionale Modell des zumindest einen Prothesenzahns oder das virtuelle dreidimensionale Modell des zumindest einen Prothesenzahns und das virtuelle dreidimensionale Modell der Prothesenbasis im Volumen kleiner. Das virtuelle dreidimensionale Modell des zumindest einen Prothesenzahns kann dabei die Stützstruktur als Teil der Verbindungsoberfläche zur Verbindung der Trägerstruktur aufweisen.

Der Fräskörper kann eine Ronde sein. Der Fräskörper kann eine Haltestruktur aufweisen, mit der der Fräskörper an einer Vorrichtung zum subtraktiven Bearbeiten mit einem CAM-Verfahren befestigt werden kann. Bevorzugt kann es sich bei der Vorrichtung zum subtraktiven Bearbeiten mit einem CAM-Verfahren um eine computergesteuerte Fräse handeln, wie beispielsweise eine computergesteuerte 4-Achs-Fräse oder 5-Achs-Fräse. Unter einem Fräskörper im Sinne der vorliegenden Erfindung wird ein Festkörper verstanden, der zum subtraktiven Bearbeiten mit Fräswerkzeugen geeignet ist und dessen geometrische Abmessungen zur Handhabung in subtraktiven CAM-Vorrichtungen, wie beispielsweise computergesteuerten CAM-Fräsmaschinen, geeignet ist.

Ein für Prothesenzähne geeignetes Material sollte zumindest im Endzustand zahnfarben sein und gleichzeitig die notwendige Härte und Erscheinung haben, um für Prothesenzähne einsetzbar zu sein. Das für die Prothesenzähne geeignete Material ist vorzugsweise ein endgehärteter zahnfarbener Kunststoff, kann aber auch eine geeignete zahnfarbene Keramik sein. Derartige Materialien zur Herstellung von Prothesenzähnen sind dem Fachmann bekannt.

Es kann vorgesehen sein, dass das Material für die Prothesenzähne ein Kunststoff ist oder eine Kunststoffzusammensetzung ist, bevorzugt ein Polymethylmethacrylat (PMMA) oder eine PMMA-haltige Kunststoffzusammensetzung und/oder ein Heiß-Polymerisat ist.

Die Verbindungsoberfläche im Sinne der vorliegenden Erfindung stellt die Oberfläche dar, an der der zumindest eine Prothesenzahn in der dentalen Teilprothese mit der Prothesenbasis und die Stützstruktur zur Halterung der Trägerstruktur mit der Trägerstruktur verbunden ist, bevorzugt flächenbündig verbunden ist. Besonders bevorzugt ist zwischen dem zumindest einen Prothesenzahn und der Prothesenbasis sowie zwischen der Stützstruktur und der Trägerstruktur kein Freiraum beziehungsweise kein freies Volumen vorgesehen.

Die Schritte A), D), E), F), G), H) und I) erfolgen bei einem erfindungsgemäßen Verfahren zwingend, während entweder der Schritt B1) oder der Schritt B2) und entweder der Schritt C1) oder der Schritt C2) bei dem erfindungsgemäßen Verfahren erfolgen müssen.

Das Material für den zumindest einen Prothesenzahn (also das Material des Fräskörpers oder zumindest des Teils des Fräskörpers, aus dem der zumindest eine Prothesenzahn gefertigt wird), der zumindest eine fluide polymerisierbare Kunststoff, der zahnfleischfarbene Kunststoff, das Material aus dem die Trägerstruktur gefertigt wird und (sofern überhaupt vorhanden) alle andere Materialien, aus denen die dentale Teilprothese gefertigt ist, müssen biokompatibel sein und für die Verwendung im Mundraum des Patienten geeignet und gegebenenfalls zugelassen sein.

Unter einer oralen Seite und einer oralen Oberfläche der Prothesenbasis oder der dentalen Teilprothese ist vorliegend die zum Mundraum weisende Oberfläche/Seite zu verstehen, also die von der Auflagefläche auf dem Zahnfleisch wegweisende Oberfläche/Seite.

Es kann vorgesehen sein, dass das Einfüllen des zumindest eines fluiden polymerisierbaren Kunststoffs in Schritt G) durch Stopfen erfolgt und/oder mit einem Überdruck durchgeführt wird, insbesondere in einem Drucktopf oder in einem Druckraum mit einem Druck über Normaldruck, bevorzugt mit einem Druck von mindestens 150 kPa, besonders bevorzugt mit einem Druck von mindestens 200 kPa, ganz besonders bevorzugt mit einem Druck von mindestens 200 kPa und höchstens 400 kPa.

Ferner kann vorgesehen sein, dass das Aushärten oder Teilhärten des fluiden polymerisierbaren Kunststoffs in Schritt H) durch Einwirken von Wärme und/oder Druck erfolgt, wobei bevorzugt das Aushärten oder Teilhärten über einen Zeitraum zwischen 10 Minuten und 120 Minuten erfolgt, besonders bevorzugt zwischen 30 Minuten und 60 Minuten.

Es kann auch vorgesehen sein, dass das Aushärten oder Teilhärten des zumindest einen fluiden polymerisierbaren Kunststoffs in Schritt H) durch eine Lichthärtung erfolgt, insbesondere durch eine Lichtpolymerisation erfolgt.

Die Trägerstruktur kann bei dem erfindungsgemäßen Verfahren separat von der Prothesenbasis und dem zumindest einen Prothesenzahn gefertigt werden.

Die Trägerstruktur kann bevorzugt durch Drucken eines Teil mit nachfolgendem Ausbrennen oder Modellguss oder durch Fräsen aus hochfestem Material gefertigt werden. Bevorzugt besteht die Trägerstruktur aus einem Metall, besonders bevorzugt aus Edelstahl oder Titan.

Als Abschluss des Verfahrens kann eine Oberflächenvergütung durch Politur und/oder chemische Behandlung der dentalen Teilprothese erfolgen.

Es kann vorgesehen sein, dass die Trägerstruktur in Schritt F) außer an der Verbindungsoberfläche oder außer an der Stützstruktur der Verbindungsoberfläche des Fräskörpers von der bearbeiteten Oberfläche des Fräskörpers abstehend angeordnet oder befestigt wird.

Es kann auch vorgesehen sein, dass in Schritt G) der zumindest eine fluide polymerisierbare Kunststoff bereichsweise auf den Fräskörper aufgetragen wird oder der Fräskörper nach dem Einfüllen des zumindest einen fluiden polymerisierbaren Kunststoffs bereichsweise oder vollständig von dem zumindest einen fluiden polymerisierbaren Kunststoff umschlossen wird.

Bevorzugt entsteht das ausgehärtete oder teilweise polymerisierte Kunststoffmaterial in Schritt H) an oder in der Verbindungsoberfläche des Fräskörpers und in flächenbündiger Verbindung mit der Verbindungsoberfläche des Fräskörpers.

Bevorzugt kann vorgesehen sein, dass in Schritt I) keine oder keine wesentliche subtraktive Bearbeitung der Trägerstruktur erfolgt. Ein Freilegen von Teilen der Trägerstruktur kann allerdings erfindungsgemäß besonders bevorzugt in Schritt I) erfolgen.

Bei erfindungsgemäßen Verfahren kann vorgesehen sein, dass das Erzeugen des virtuellen dreidimensionalen Modells des zumindest einen Prothesenzahns, des virtuellen dreidimensionalen Modells der Prothesenbasis und des virtuellen dreidimensionalen Modells der Trägerstruktur anhand des virtuellen dreidimensionalen Modells der dentalen Teilprothese in Schritt B1) derart erfolgt dass das virtuelle dreidimensionale Modell des zumindest einen Prothesenzahns, das virtuelle dreidimensionale Modell der Prothesenbasis und das virtuelle dreidimensionale Modell der Trägerstruktur zusammengesetzt das virtuelle dreidimensionale Modell der dentalen Teilprothese ergeben oder das Erzeugen des virtuellen dreidimensionalen Modells des zumindest einen Prothesenzahns und des virtuellen dreidimensionalen Modells der Prothesenbasis anhand des virtuellen dreidimensionalen Modells der dentalen Teilprothese ohne Trägerstruktur in Schritt B2) derart erfolgt dass das virtuelle dreidimensionale Modell des zumindest einen Prothesenzahns und das virtuelle dreidimensionale Modell der Prothesenbasis zusammengesetzt das virtuelle dreidimensionale Modell der dentalen Teilprothese ohne Trägerstruktur ergeben.

Hierdurch können das virtuelle dreidimensionale Modell des zumindest einen Prothesenzahns, das virtuelle dreidimensionale Modell der Prothesenbasis und gegebenenfalls das virtuelle dreidimensionale Modell der Trägerstruktur durch File-Splitting unmittelbar aus dem virtuellen dreidimensionalen Modell der dentalen Teilprothese erzeugt werden.

Des Weiteren kann vorgesehen sein, dass in Schritt B2) ein virtuelles dreidimensionales Modell einer Trägerstruktur mit CAD konstruiert wird, wobei die CAD-Konstruktion unter Anwendung eines virtuellen dreidimensionalen Modells des Mundraums eines Patienten und unter Anwendung des virtuellen dreidimensionalen Modells der dentalen Teilprothese ohne Trägerstruktur erfolgt und wobei dieses mit CAD konstruierte virtuelle dreidimensionale Modell der Trägerstruktur in Schritt C1) zum Herstellen der Trägerstruktur verwendet wird.

Hierdurch kann die Trägerstruktur einzeln an die individuellen Bedürfnisse des Patienten angepasst werden.

Ferner kann vorgesehen sein, dass die Trägerstruktur aus einem Material mit einer größeren Härte und/oder Elastizität als vollvernetztes PMMA besteht oder hergestellt wird und/oder die Trägerstruktur aus Metall, Keramik, rostfreiem Edelstahl, Titan oder einer Titanlegierung hergestellt wird.

Für die Härte von vollvernetztem PMMA wird eine Kugeldruckhärte nach ISO 2039-1 von 195 MPa angenommen.

Für die Elastizität von vollvernetztem PMMA wird ein Zug-E-Modul nach ISO 527 von etwa 3200 MPa angenommen und/oder eine Zugfestigkeit nach ISO 527 von etwa 73 MPa angenommen.

Es kann erfindungsgemäß vorgesehen sein, dass die Trägerstruktur aus einem Material mit einer Kugeldruckhärte nach ISO 2039-1 von mindestens 195 MPa besteht oder hergestellt wird.

Auch kann vorgesehen sein, dass die Trägerstruktur aus einem Material mit einer Zugfestigkeit nach ISO 527 von mindestens 73 MPa besteht oder hergestellt wird.

Dadurch wird sichergestellt, dass die Trägerstruktur zum Tragen der gesamten Konstruktion der dentalen Teilprothese geeignet ist.

Des Weiteren kann vorgesehen sein, dass in Schritt I) das ausgehärtete oder teilweise polymerisierte Kunststoffmaterial mit einem CAM-Verfahren derart subtraktiv bearbeitet werden, dass die Trägerstruktur teilweise freigelegt wird oder dass in Schritt I) das ausgehärtete oder teilweise polymerisierte Kunststoffmaterial und der Fräskörper derart mit einem CAM-Verfahren derart subtraktiv bearbeitet werden, dass die Trägerstruktur teilweise freigelegt wird.

Hierdurch wird erreicht, dass die Trägerstruktur zur Befestigung an noch vorhandenen Zähnen im Mundraum des Patienten oder an anderen Fixpunkten im Mundraum befestigt werden können.

Es kann auch vorgesehen sein, dass nach Schritt G) oder nach Schritt H) ein Schritt J) erfolgt, bei dem das teilweise polymerisierte Kunststoffmaterial endgehärtet wird, insbesondere durch Lichtpolymerisation endgehärtet wird, wobei vorzugsweise im Anschluss an Schritt I) und J) eine Politur der Oberfläche der dentalen Teilprothese und/oder eine Oberflächenveredelung der dentalen Teilprothese durchgeführt wird.

Hierdurch wird eine hohe Endfestigkeit des endgehärteten Kunststoffmaterials und damit der Prothesenbasis der dentalen Teilprothese insbesondere in der Verbindung zwischen den Prothesenzähnen und der Prothesenbasis und zwischen der Trägerstruktur, dem zumindest einen Prothesenzahn und der Prothesenbasis erzielt.

Gemäß einer bevorzugten Weiterbildung kann vorgesehen sein, dass an dem Fräskörper eine umlaufende Wandung angeordnet ist, wobei die umlaufende Wandung in den Schritten D) bis G) erhalten bleibt, wobei bevorzugt in Schritt G) die umlaufende Wandung in Kontakt mit dem zumindest einen fluiden polymerisierbaren Kunststoff kommt, besonders bevorzugt der zumindest eine fluide polymerisierbare Kunststoff derart auf die Verbindungsoberfläche und in das in Schritt E) abgetragene Volumen in der Oberfläche des Fräskörpers gefüllt wird, dass der Pegel bis an die umlaufende Wandung steigt, aber unterhalb der umlaufenden Wandung bleibt.

Hierdurch ist das Verfahren für den Anwender leichter durchführbar. Die Gefahr, die Umgebung mit dem fluiden polymerisierbaren Kunststoff zu verschmutzen, ist hierdurch reduziert.

Es kann vorgesehen sein, dass die Oberfläche des Fräskörpers, in der in Schritt B) die Verbindungsoberfläche zwischen den Prothesenzähnen und der Prothesenbasis hergestellt wird, eine ebene Oberfläche ist.

Hierdurch wird später das Einfüllen oder Auftragen des fluiden polymerisierbaren Kunststoffs erleichtert. Zudem kann so ein handelsübliches Blank als Fräskörper verwendet werden.

Es kann auch vorgesehen sein, dass das ausgehärtete Kunststoffmaterial oder das teilweise polymerisierte Kunststoffmaterial nach vollständiger Aushärtung von dem zahnfleischfarbenen Kunststoff der Prothesenbasis abweichende Materialeigenschaften und/oder Farbe aufweist, wobei bevorzugt das ausgehärtete Kunststoffmaterial oder das teilweise polymerisierte Kunststoffmaterial nach vollständiger Aushärtung eine von dem zahnfleischfarbenen Kunststoff des Prothesenbasis abweichende Härte und/oder Transparenz aufweist.

Des Weiteren kann vorgesehen sein, dass in Schritt G) das Einfüllen des zumindest einen fluiden polymerisierbaren Kunststoffs auf die Verbindungsoberfläche und in das in Schritt E) abgetragenen Volumen in dem Fräskörper derart erfolgt, dass der zumindest eine fluide polymerisierbare Kunststoff den bearbeiteten Fräskörper mit der Trägerstruktur verbindet, wobei bevorzugt der zumindest eine fluiden polymerisierbaren Kunststoff die in Schritt E) hergestellte Verbindungsoberfläche im Fräskörper außer an den von der Trägerstruktur abgedeckten Stellen der Stützstruktur vollständig benetzt und/oder zumindest das in Schritt E) abgetragene Volumen in der Oberfläche des Fräskörpers vollständig, insbesondere ohne Gaseinschlüsse, mit dem zumindest einen fluiden polymerisierbaren Kunststoff aufgefüllt wird.

Hiermit wird sichergestellt, dass später in der dentalen Teilprothese keine Luftbeziehungsweise Gaseinschlüsse vorhanden sind und eine stabile und formschlüssige Verbindung der Schichten beziehungsweise Teile der dentalen Teilprothese erfolgt.

Ferner kann vorgesehen sein, dass in Schritt I) das subtraktive Bearbeiten des ausgehärteten oder teilweise polymerisierten Kunststoffmaterials und des Fräskörpers aus Richtung der Unterseite des Fräskörpers, die der in Schritt E) bearbeiteten Oberfläche des Fräskörpers gegenüberliegt, mit dem CAM-Verfahren nach Maßgabe der okklusalen Oberfläche und der oralen Oberfläche des virtuellen Modells der dentalen Teilprothese erfolgt.

Auch kann vorgesehen sein, dass in Schritt I) ein subtraktives Bearbeiten des ausgehärteten oder teilweise polymerisierten Kunststoffmaterials oder des ausgehärteten oder teilweise polymerisierten Kunststoffmaterials und des Fräskörpers aus Richtung der in Schritt E) bearbeiteten Oberfläche des Fräskörpers mit dem CAM-Verfahren nach Maßgabe basalen Oberfläche des virtuellen Modells der dentalen Teilprothese erfolgt.

Hierdurch wird sichergestellt, dass die jeweiligen Oberflächen aus den gewünschten Materialien des Fräskörpers und des ausgehärteten oder teilweise polymerisierten Kunststoffmaterials gefertigt werden.

Es kann auch vorgesehen sein, dass auf der zur Bearbeitung mit dem subtraktiven CAM-Verfahren vorgesehenen Oberfläche des Fräskörpers ein Hohlraum zur Aufnahme des fluiden polymerisierbaren Kunststoffs angeordnet ist, wobei der Hohlraum einen Boden aufweist und der Hohlraum ausgehend vom Rand des Bodens seitlich durch eine umlaufende Wandung begrenzt ist, wobei die umlaufende Wandung ringförmig ist und wobei das für Prothesenzähne geeignete Material den Boden bildet und sich bis zu einer Unterseite des Fräskörpers erstreckt, die der Oberseite des Fräskörpers gegenüberliegend angeordnet ist.

Hierdurch wird das Einfüllen des zumindest einen fluiden polymerisierbaren Kunststoffs erleichtert.

Eine ringförmige Wandung im Sinne der vorliegenden Erfindung weist eine Ausnehmung auf, die den geometrischen Mittelpunkt der Ausnehmung umschließt. Bevorzugt ist die Ausnehmung ohne Hinterschneidungen geformt und/oder jeder Punkt in der Ausnehmung ist in gerader Linie mit jedem anderen Punkt in der Ausnehmung verbindbar, ohne dass die gerade Linie innerhalb der umlaufenden Wandung verläuft. Bevorzugt ist die Ausnehmung ein kompakter geometrischer Körper.

Je nach Konstruktion kann die Trägerstruktur direkt auf dem bearbeiteten Fräskörper ohne Abstand aufliegen. Diese Variante wird erfindungsgemäß bevorzugt, weil dies leichter umsetzbar ist.

Des Weiteren kann vorgesehen sein, dass beim Erzeugen des virtuellen dreidimensionalen Modells des zumindest einen Prothesenzahns in Schritt B1) oder B2) zumindest eine Retention der Trägerstruktur vorgesehen wird, wobei die zumindest eine Retention von dem zumindest einen Prothesenzahn beabstandet sind und wobei die zumindest eine Retention nach Schritt H) von dem ausgehärteten Kunststoffmaterial umgeben ist, wobei vorzugsweise die Trägerstruktur zumindest eine Klammer zur Verbindung mit Zähnen des Patienten aufweist, wobei die zumindest eine Klammer mit der zumindest einen Retention verbunden ist.

Hierdurch wird die dentale Teilprothese mechanisch stabilisiert. Die zumindest eine Klammer dient der Befestigung der dentalen Teilprothese im Mundraum.

Ferner kann vorgesehen sein, dass die Trägerstruktur nach Schritt C1) oder C2) und vor Schritt F) an den Oberflächen, die an die Verbindungsoberfläche des bearbeiteten Fräskörpers angelegt werden, vorbehandelt werden, bevorzugt durch Aufrauen, Auftragen eines Verbindungmittels, Reinigung und/oder chemisches Ätzen vorbehandelt werden.

Hierdurch wird die Verbindung zwischen der Trägerstruktur und der Verbindungsoberfläche des bearbeiteten Fräskörpers stabiler.

Es kann auch vorgesehen sein, dass beim subtraktiven Bearbeiten des ausgehärteten oder teilweise polymerisierten Kunststoffmaterials und des Fräskörpers in Schritt I) ein Offset zur Beabstandung des Werkzeugs zum Umsetzen des CAM-Verfahrens in Bezug auf die Trägerstruktur vorgesehen wird.

Hierdurch wird eine Beschädigung der Trägerstruktur vermieden beziehungsweise die Gefahr einer Beschädigung reduziert, indem die Werkzeuge (Fräsköpfe) der CAM-Vorrichtung mit einem durch den Offset vorgegebenen Sicherheitsabstand zu den Bereichen geführt werden, die von der Trägerstruktur eingenommen werden.

Die der vorliegenden Erfindung zugrundeliegenden Aufgaben werden auch zumindest teilweise gelöst durch eine dentale Teilprothese hergestellt mit einem zuvor beschriebenen Verfahren.

Die der vorliegenden Erfindung zugrundeliegenden Aufgaben werden auch zumindest teilweise gelöst durch eine Vorrichtung zur Umsetzung eines zuvor beschriebenen Verfahrens, die Vorrichtung aufweisend:
1) ein Verbindungsoberflächen-Berechnungsmodul zur Berechnung einer Verbindungsoberfläche zwischen dem zumindest einen Prothesenzahn und einer Stützstruktur zur Positionierung der Trägerstruktur einerseits und der Prothesenbasis und der Trägerstruktur andererseits nach Maßgabe eines virtuellen dreidimensionalen Modells einer Form der Verbindungsoberfläche des zumindest einen Prothesenzahns zu der Prothesenbasis und zu der Trägerstruktur in der dentalen Teilprothese;
2) ein Verbindungsoberflächen-Steuerungsmodul für eine CAM-Vorrichtung programmiert zur Steuerung der subtraktiven Herstellung der mit dem Verbindungsoberflächen-Berechnungsmodul berechneten Verbindungsoberfläche in einem Fräskörper; und
3) ein Teilprothesen-Steuerungsmodul für eine CAM-Vorrichtung programmiert zur Steuerung der subtraktiven Herstellung der Oberfläche der herzustellenden dentalen Teilprothese nach Maßgabe des virtuellen Modells einer äußeren Oberfläche der dentalen Teilprothese.

Bei der Vorrichtung kann es sich um eine Steuerung für eine CAD/CAM-Vorrichtung handeln, mit der dentale Teilprothesen herstellbar sind, wobei durch eine geeignete Programmierung der CAD/CAM-Vorrichtung die erfindungsgemäße Vorrichtung bereitgestellt wird. Eine geeignete, aus dem Stand der Technik bekannte CAD/CAM-Vorrichtung zum Herstellen einer dentalen Teilprothese kann also durch ein Softwareupdate mit einer geeigneten Programmierung in eine erfindungsgemäße Vorrichtung umgewandelt werden.

Dabei kann vorgesehen sein, dass die Vorrichtung ein Trägerstruktur-Berechnungsmodul aufweist, das die Berechnung einer Trägerstruktur zur Verbindung mit einer subtraktiv herzustellenden Verbindungsoberfläche des Fräskörpers durchführt, wobei die Trägerstruktur derart berechenbar ist, dass sie ein zu der Verbindungsoberfläche passendes Anlegestück bildet, wobei vorzugsweise das Verbindungsoberflächen-Steuerungsmodul für eine CAM-Vorrichtung programmiert ist zur Steuerung der subtraktiven Herstellung der mit dem Verbindungsoberflächen-Berechnungsmodul und dem Trägerstruktur-Berechnungsmodul berechneten Verbindungsoberfläche in dem Fräskörper.

Hierdurch wird sichergestellt, dass die Vorrichtung auch zur Berechnung und Handhabung des dreidimensionalen virtuellen Modells der Trägerstruktur geeignet ist.

Zusammengefasst betrifft die Erfindung ein Verfahren zur Herstellung einer dentalen Teilprothese über CAD-Modelle mit den Schritten:
Erzeugen je eines Modells von Prothesenzähnen, einer Prothesenbasis und einer Trägerstruktur;
Herstellen der Trägerstruktur digital oder analog;
Herstellen einer Verbindungsoberfläche in einem Fräskörper;
Anordnen der Trägerstruktur an der Verbindungsoberfläche;
Einfüllen eines fluiden polymerisierbaren Kunststoffs in das abgetragene Volumen in der Oberfläche des Fräskörpers;
Aushärten oder Teilhärten des Kunststoffs; und
Subtraktives Bearbeiten des polymerisierten Kunststoffmaterials und des Fräskörpers (6) mit einem CAM-Verfahren.

Die Erfindung betrifft auch eine dentale Teilprothese hergestellt mit einem solchen Verfahren und eine Vorrichtung zum Umsetzen eines solchen Verfahrens.

Der Erfindung liegt die überraschende Erkenntnis zugrunde, dass es unter Anwendung digitaler Fertigungstechniken möglich ist, zumindest einen Prothesenzahn, eine Prothesenbasis und eine Trägerstruktur zur Herstellung einer dentale Teilprothese unmittelbar entsprechend eines virtuellen dreidimensionalen Modells der dentalen Teilprothese (das Modell mit oder ohne Trägerstruktur) miteinander zu verbinden und dabei gleichzeitig eine zeitsparende und ressourcenschonende Herstellung bei Umsetzung des Herstellungsverfahrens zu gewährleisten. Dabei gelingt es überraschend durch das Berechnen beziehungsweise durch das Herstellen der Verbindungsoberfläche mit der Stützstruktur zum Anlegen oder Befestigen der Trägerstruktur an den bearbeiteten Fräskörper, die Positionierung der Trägerstruktur relativ zu dem zumindest einen Prothesenzahn und auch relativ zu der Prothesenbasis festzulegen und gleichzeitig die Verbindung der drei Teile der dentalen Teilprothese durch Einfüllen des polymerisierbaren Kunststoffs zur Herstellung der Prothesenbasis miteinander unmittelbar zu verbinden, wobei die Verbindungoberfläche anhand der verwendeten virtuellen dreidimensionalen Modelle - und gegebenenfalls zusätzlich durch die im Rahmen des Verfahrens erzeugten virtuellen dreidimensionalen Modelle - berechnet und im Fräskörper erzeugt wird. Dabei kann die Menge des verbrauchten fluiden polymerisierbaren Kunststoffs geringgehalten werden kann. Es ist möglich große Anteile des zumindest einen Prothesenzahns oder den gesamten zumindest einen Prothesenzahn aus Materialien zu fertigen, die nicht aus einem ausgehärteten und zuvor fluiden fließfähigen Kunststoff (wie einem Pulver-Flüssigkeits-PMMA) bestehen.

Durch eine bereits grob den Endmaßen entsprechenden Geometrie des Fräskörpers kann ein signifikant verringerter Materialverbrauch erreicht werden. Auch kann eine größere Bandbreite an Werkstoffen zum Einsatz kommen, eine Limitierung auf PMMA besteht nicht mehr. Aufgrund des verringerten subtraktiven Abtrags lassen sich auch Fräszeiten signifikant verringern. Durch das erst im verbundenen Zustand finale Überfräsen entspricht das Ergebnis mit hoher Genauigkeit der digitalen Datenbasis, also dem virtuellen dreidimensionalen Modell der herzustellenden dentalen Teilprothese. Durch die Anwendung der digitalen Herstellungstechniken kann auch eine Beschädigung oder Zerstörung der Trägerstruktur verhindert werden, weil beim finalen Überfräsen die Position und die Lage der Trägerstruktur anhand der virtuellen dreidimensionalen Modells der Trägerstruktur bekannt ist.

Durch das erfindungsgemäße Verfahren wird eine hohe Passgenauigkeit der dentalen Teilprothese durch direktes Fräsen der finalen Formgebung erreicht. Es entsteht kein Aufwand bei einem Verkleben von einzelnen Prothesenzähnen und es entstehen in der dentalen Teilprothese keine Inhomogenitäten durch einen Fügeprozess. Gleichzeitig kann durch vollständiges Aushärten des Fräskörpers oder durch die Verwendung eines besonders harten und festen Fräskörpers ein besonders abrasionsfestes Material für den zumindest einen Prothesenzahn und durch Verwenden eines geschichteten Fräskörpers kann zusätzlich ein besonders ästhetisch ansprechendes Prothesenzahnmaterial gewonnen werden. Bei dentalen Teilprothesen ergibt sich ein natürlicher Farbübergang zahnfleischfarben-zahnfarben an den richtigen Stellen und es muss hierbei kein Kompromiss eingegangen werden. Eine besonders hohe Ästhetik kann dabei durch die Verwendung von Multilayer-Frässcheiben als zahnfarbener Vollkörper als Fräskörper für den zumindest einen Prothesenzahn erreicht werden.

Die Herstellung aus dem Fräskörper, aus dem ausgehärteten oder teilgehärteten fluiden polymerisierbaren Kunststoffs, mit der Trägerstruktur und mit dem erfindungsgemäßen Verfahren kann in einem lediglich dreistufigen oder vierstufigen Herstellungsprozess erfolgen. Des Weiteren sind keine unterschiedlichen Formvarianten an Fräskörpern notwendig. Es kann aber auch ein sehr geringer Satz unterschiedlich großer Fräsrohlinge verwendet werden beziehungsweise vorteilhaft sein.

Im Folgenden werden Ausführungsbeispiele der Erfindung anhand von drei schematisch dargestellten Figuren und einem Ablaufdiagramm erläutert, ohne jedoch dabei die Erfindung zu beschränken. Dabei zeigt:
Figur 1: eine schematische seitliche Ansicht einer dentalen Teilprothese, deren Anordnung im Mundraum eines Patienten und den Fräskörper angedeutet als rechteckiger Rahmen;
Figur 2: eine schematische Aufsicht auf die orale Seite eines in einen runden Fräskörper gefrästen Modells des Mundraums mit einer Verbindungsoberfläche und eingesetzter Trägerstruktur;
Figur 3: eine schematische perspektivische Ansicht auf eine Oberseite eines Fräskörpers mit ringförmiger Wandung zur Umsetzung eines erfindungsgemäßen Verfahrens; und
Figur 4: den Ablauf eines erfindungsgemäßen Verfahrens zum Herstellen einer dentalen Teilprothese.

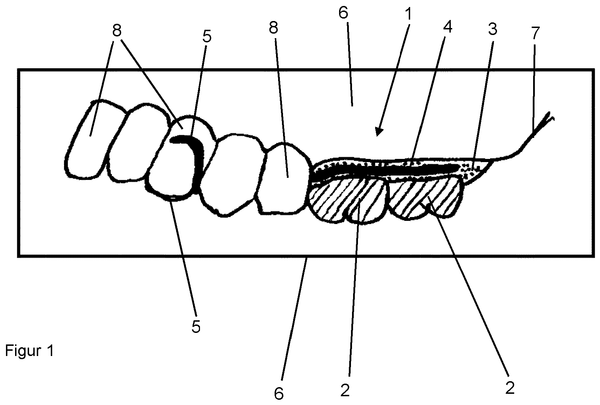

Figur 1 zeigt eine schematische seitliche Ansicht einer dentalen Teilprothese 1 und deren Anordnung im Mundraum eines Patienten.

Die dentale Teilprothese 1 weist zwei Prothesenzähne 2 auf. Für eine erfindungsgemäße dentale Teilprothese 1 ist es jedoch ausreichend, wenn diese zumindest einen Prothesenzahn aufweist. Auch muss es sich nicht um zwei benachbarte Molare handeln, wie in Figur 1 gezeigt, sondern es können ein oder mehrere beliebige Zähne ersetzt werden. Der zumindest eine Prothesenzahn 2 ist aus einem Fräskörper 6 gefertigt, der als rechteckiger Rahmen in Figur 1 angedeutet ist und der die Lage des zumindest einen Prothesenzahns 2 in dem Fräskörper 6 andeutet. Der Fräskörper 6 kann aus einem möglichst harten, zahnfarbenen Kunststoff bestehen.

Die dentale Teilprothese 1 weist des Weiteren eine Prothesenbasis 3 auf. Die Prothesenbasis 3 ist aus einem zahnfleischfarbenen Kunststoff gefertigt, der als fluider polymerisierbarer Kunststoff in den teilweise ausgefrästen Fräskörper 6 eingefüllt und darin ausgehärtet oder teilgehärtet wurde, bevor die Prothesenbasis 3 daraus mit einem subtraktiven CAM-Verfahren hergestellt wurde. Die dentale Teilprothese 1 weist des Weiteren eine Trägerstruktur 4, 5 auf. Die Trägerstruktur 4, 5 kann eine Retention 4 und eine Klammer 5 aufweisen. Innerhalb der Prothesenbasis 3 kann sich die Retention 4 der Trägerstruktur 4, 5 befinden. Die Klammer 5 befindet sich außerhalb der Prothesenbasis 3.

Die dentale Teilprothese 1 liegt mit der Prothesenbasis 3 in Figur 1 auf einem Kieferkamm 7 im Mundraum des Patienten auf. Die Trägerstruktur 4, 5 kann über die Klammer 5 an zumindest einem Zahn 8 im Mundraum des Patienten befestigt sein. Die Zähne 8, der Kieferkamm 7 und der Fräskörper 6 sind nicht Teil der dentalen Teilprothese 1.

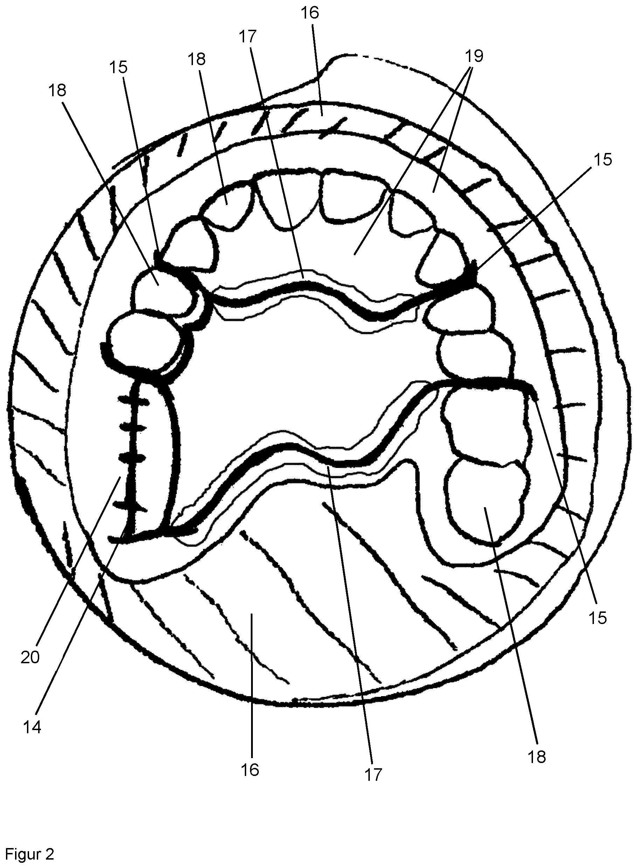

Figur 2 zeigt eine schematische Aufsicht auf die orale Seite eines in einen runden Fräskörper 16 gefrästen Modells eines Teils des Mundraums mit einer Verbindungsoberfläche 20 im Fräskörper 16 und mit eingesetzter Trägerstruktur 14, 15. Die Trägerstruktur 14, 15 kann eine Retention 14 und eine Klammer 15 aufweisen. Die Verbindungsoberfläche 20 wird anhand eines Übergangs zwischen zumindest einem Prothesenzahn und einer Prothesenbasis (in Figur 2 nicht gezeigt) und der Trägerstruktur 14, 15 anhand eines virtuellen dreidimensionalen Modells des zumindest einen Prothesenzahns und eines virtuellen dreidimensionalen Modells der Prothesenbasis erzeugt. Das virtuelle dreidimensionale Modell des zumindest einen Prothesenzahns und das virtuelle dreidimensionale Modell der Prothesenbasis kann rechnerisch aus einem virtuellen dreidimensionalen Modell der dentalen Teilprothese mittels File-Splitting erzeugt werden. Die Verbindungsoberfläche 20 umfasst neben den Kontaktflächen zwischen dem zumindest einem Prothesenzahn und der Prothesenbasis auch eine Stützstruktur 17, die zur Verbindung des bearbeiteten Fräskörpers 16 mit der Trägerstruktur 14, 15 und zur Halterung und Positionierung der Trägerstruktur 14, 15 gegen den bearbeiteten Fräskörper 16 vorgesehen ist. Die Stützstruktur 17 stützt die Trägerstruktur 14, 15 vorliegend in einer Fläche unter einer Gaumenplatte, was erfindungsgemäß besonders bevorzugt ist. Es ist aber auch möglich, dass die Stützstruktur 17 die Trägerstruktur 14, 15 nur an einzelnen Punkten, bevorzugt an zumindest drei Punkten stützt. Hierdurch wird eine eindeutige Positionierung und Orientierung der Trägerstruktur 14, 15 gegen die Verbindungsoberfläche 20 sichergestellt. Der Übergang zwischen dem zumindest einen Prothesenzahn einerseits und der Prothesenbasis und der Trägerstruktur andererseits, wird mit einem CAM-Verfahren im Fräskörper 16 anhand der virtuellen Modelle erzeugt. Zusätzlich kann im Fräskörper 16 ein Modell 19 eines Teils des Mundraums des Patienten erzeugt werden, um die Klammern 15 an den Zähnen 18 des Modells zu befestigen. Auch die Kontaktflächen zwischen den Klammern 15 und den Zähnen 18 stellt ein Teil der Stützstruktur 17 dar und sind also als Teil der Verbindungsoberfläche 20 aufzufassen.

Die Trägerstruktur 14, 15 kann anschließend einfach auf die Verbindungsoberfläche 20, insbesondere auf die Stützstruktur 17 eingesetzt beziehungsweise aufgelegt werden. Ein fluider polymerisierbarer Kunststoff kann in dieser Situation in den in den Fräskörper 16 gefrästen Hohlraum im Bereich der Verbindungsoberfläche 20 gegossen werden und dort ausgehärtet oder teilgehärtet werden, um das Material für die Prothesenbasis bereitzustellen.

Anschließend kann die dentale Teilprothese mit einem CAM-Verfahren auf dem Fräskörper 16, der Trägerstruktur 14, 15 und dem vollständig oder teilweise gehärteten Kunststoffmaterial herausgefräst werden. Hierfür wird das virtuelle dreidimensionale Modell der dentalen Teilprothese verwendet. Der fluide polymerisierbare Kunststoff kann bei Teilhärtung abschließend endgehärtet werden.

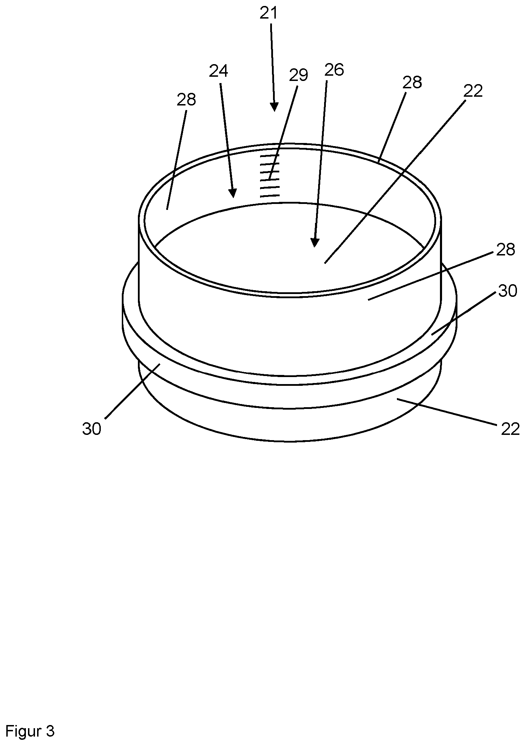

Figur 3 zeigt eine schematische perspektivische Ansicht auf eine Oberseite (in Figur 3 oben) auf einen Fräskörpers 21 zur Umsetzung eines erfindungsgemäßen Verfahrens. Der Fräskörper 21 weist einen Vollkörper 22 aus einem ersten Material auf oder der Fräskörper 21 kann aus dem Vollkörper 22 bestehen. Der Vollkörper 22 erstreckt sich bis zu einer der Oberseite des Fräskörpers 21 gegenüberliegenden Unterseite (in Figur 3 nicht zu sehen). Das erste Material kann ein vollständig polymerisierter zahnfarbener Kunststoff sein, der zur Herstellung von Prothesenzähnen geeignet ist und hierfür die notwendige Abrasionsfestigkeit aufweist. Das erste Material sollte vorzugsweise bereits so, wie es in dem Fräskörper 21 vorliegt, biokompatibel sein, um für Anwendungen im Mundraum eines Patienten geeignet zu sein.

Auf der Oberseite des Fräskörpers 21 ist ein Hohlraum 24 mit einem Boden 26 angeordnet, wobei der Hohlraum 24 seitlich von einer umlaufenden Wandung 28 begrenzt ist. Der Boden 26 wird (vorzugsweise vollständig) durch den Vollkörper 22 gebildet. Die umlaufende Wandung 28 kann aus dem ersten Material bestehen oder aus einem anderen Material bestehen. Insbesondere kann die umlaufende Wandung 28 ein Ringkörper oder ein Rohrstück sein, das auf den Vollkörper 22 gesteckt und dort mit diesem fest verbunden ist. Die Verbindung kann durch Kleben erfolgen. Der Vollkörper 22 kann zylindrisch geformt sein. Der Vollkörper 22 kann zum Aufstecken eines Ringkörpers oder Rohrstücks als umlaufende Wandung 28 eine Stufe am Außenumfang aufweisen, auf die der Ringkörper oder das Rohrstück flächenbündig aufgesteckt ist. Die umlaufende Wandung 28 kann insbesondere ein zylindrisches Rohrstück sein. Die umlaufende Wandung 82 kann auch ein Metallringkörper sein. Der Fräskörper 21 wird am Boden 26 auf der Oberseite des Fräskörpers 21 subtraktiv bearbeitet, um die Verbindungsoberfläche (in Figur 3 nicht gezeigt) zwischen dem zumindest einen Prothesenzahn (nicht gezeigte) einerseits und der Prothesenbasis und der Trägerstruktur (nicht gezeigt) andererseits herzustellen.

An einer dem Hohlraum 24 zugewandten Innenseite der umlaufenden Wandung 28 kann eine Markierung 29 zum Bestimmen eines Füllstands in dem Hohlraum 24 angeordnet sein. Die Markierung 29 kann aber auch erst im Laufe eines Verfahrens zur Herstellung der dentalen Teilprothese an der umlaufenden Wandung 28 angebracht werden, beispielsweise eingefräst werden. Anhand der Markierung 29 kann der in den Hohlraum 24 einzufüllende fluide polymerisierbare Kunststoff (in Figur 3 nicht gezeigt) bis zur richtigen Höhe eingefüllt werden.

An wenigstens einer Außenseite des Fräskörpers 21 kann zumindest eine Halterung 30 zur Fixierung des Fräskörpers 21 in einer CAM-Vorrichtung angeordnet sein. Die Halterung 30 kann aus der Außenwand des Fräskörpers 21 als aufgesetzter Torus mit rechteckiger Querschnittsfläche vorstehen. Alternativ zu der in Figur 3 gezeigten Halterung 30 kann die Halterung 30 auch in anderer Weise realisiert werden, beispielsweise durch vorstehende Vorsprünge oder durch Vertiefungen in den Seitenflächen. Die Halterung 30 dient zur Befestigung in einer CAM-Vorrichtung (nicht gezeigt).

Der Fräskörper 21 nach Figur 3 kann bei einem erfindungsgemäßen Verfahren wie folgt eingesetzt werden. Der Fräskörper 21 wird in einer subtraktiven CAM-Vorrichtung, wie einer computergesteuerten Mehrachsfräse, mit Hilfe der Halterung 30 fixiert. Mit Hilfe eines virtuellen CAD-Modells einer zu erzeugenden dentalen Teilprothese wird in dem Boden 26 eine Oberfläche erzeugt, die der Verbindungsoberfläche zwischen dem ersten Material und der Trägerstruktur sowie dem aus dem fluiden polymerisierbaren Kunststoff herzustellenden ausgehärteten Kunststoffmaterial nach Maßgabe des virtuellen CAD-Modells entspricht. Zudem können die okklusalen beziehungsweise oralen Oberflächen der aus dem ausgehärteten Kunststoffmaterial bestehenden Oberflächen (der späteren Prothesenbasis) mit der subtraktiven CAM-Vorrichtung als Negativform aus dem Vollkörper 22 herausgearbeitet werden. Dabei kann ein Offset verwendet werden, so dass die Negativform etwas tiefer, bevorzugt zumindest einige zehntel Millimeter tiefer in den Vollkörper 22 hineingearbeitet wird, als es die okklusale beziehungsweise orale Oberfläche für das ausgehärtete Kunststoffmaterial gemäß dem CAD-Modell bei einer direkten Negativform erfordern würde. Zusätzlich kann die Markierung 29 erst in diesem Schritt an der umlaufenden Wandung 28 erzeugt werden. Anschließend kann die so neu erzeugte Oberfläche im Boden 26 des Vollkörpers 22 gereinigt werden.

Eine Trägerstruktur kann anhand eines CAD-Modells erzeugt werden (beispielsweise durch 3D-Druck aus Metall) oder sie kann analog mittels Abformung und Scan eines Modells des Mundraums oder mittels eines durch Abformung generierten Arbeitsmodells des Mundraums gefertigt werden. Danach kann die Trägerstruktur, analog wie in Figur 2 gezeigt, an der Verbindungsoberfläche an dem subtraktiv bearbeiteten Vollkörper 22 befestigt werden. Anschließend kann der fluide polymerisierbare Kunststoff (nicht gezeigt) in den Hohlraum 24 eingefüllt werden, und zwar bis zu einer Höhe, die ausreicht, damit die aus dem ausgehärteten Kunststoffmaterial bestehende Prothesenbasis der dentalen Teilprothese entsprechend dem virtuellen CAD-Modell auf der basalen Seite vollständig aus dem ausgehärteten Kunststoffmaterial herausgearbeitet werden kann. Der fluide polymerisierbare Kunststoff kann unter Druck- und Temperatur-Einwirkung aushärten und bildet das ausgehärtete Kunststoffmaterial. Anschließend kann das Zwischenprodukt wieder in der subtraktiven CAM-Vorrichtung befestigt werden und die dentale Teilprothese wird mit Hilfe der CAM-Vorrichtung anhand der okklusalen beziehungsweise oralen Oberflächen und der basalen Oberflächen des virtuellen CAD-Modells der dentalen Teilprothese herausgearbeitet. Der Prothesenzahn oder die Prothesenzähne der dentalen Teilprothese besteht beziehungsweise bestehen dann aus dem ersten Material des Fräskörpers, die Trägerstruktur der dentalen Teilprothese besteht aus dem Material, aus dem sie vor dem Einsetzen in den bearbeiteten Fräskörper gefertigt wurde, und die Prothesenbasis der dentalen Teilprothese besteht dann aus dem ausgehärteten Kunststoffmaterial.

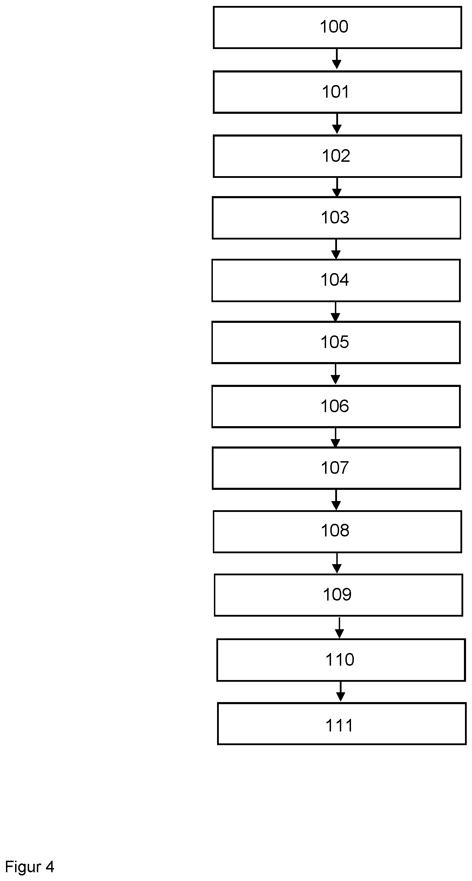

Im Folgenden wird ein beispielhaftes Verfahren anhand der mit den Figuren 1 bis 3 gezeigten Zwischen- und Endprodukte erläutert. Der Ablauf des beispielhaften Verfahrens ist in Figur 4 schematisch dargestellt.

In einem ersten Arbeitsschritt 100 wird ein virtuelles dreidimensionales Modell der zu erzeugenden dentalen Teilprothese 1 mit CAD berechnet. Das virtuelle dreidimensionale Modell der zu erzeugenden dentalen Teilprothese 1 kann eine Trägerstruktur 4, 5, 14, 15 aufweisen, muss aber keine Trägerstruktur aufweisen.

In einem darauffolgenden zweiten Arbeitsschritt 101 erfolgt eine Berechnung, beispielsweise durch File-Splitting, des virtuellen dreidimensionalen Modells der dentalen Teilprothese 1 in einen Zahnanteil als virtuelles dreidimensionales Modell des zumindest einen Prothesenzahns 2 und einen Prothesenbasisanteil als virtuelles dreidimensionales Modell der Prothesenbasis 3 geschehen. Zusätzlich kann auch ein virtuelles dreidimensionales Modell der Trägerstruktur 4, 5, 14, 15 berechnet werden, wenn das virtuelle dreidimensionale Modell der dentalen Teilprothese 1 eine solche aufweist.

In einem dritten Arbeitsschritt 102 kann eine physische Trägerstruktur 4, 5, 14, 15 anhand des virtuellen dreidimensionalen Modells der Trägerstruktur 4, 5, 14, 15 erzeugt werden oder die physische Trägerstruktur 4, 5, 14, 15 wird analog hergestellt und anschließend zum Erzeugen eines virtuellen dreidimensionalen Modells der Trägerstruktur 4, 5, 14, 15 eingescannt, wobei die Oberfläche des virtuellen dreidimensionalen Modells des zumindest einen Prothesenzahns 2 mit dem virtuellen dreidimensionalen Modell der Trägerstruktur 4, 5, 14, 15 modifiziert wird. In gleicher Weise kann auch das virtuelle dreidimensionale Modell der Prothesenbasis 3 mit dem virtuellen dreidimensionalen Modell der Trägerstruktur 4, 5, 14, 15 angepasst werden.

In einem vierten Arbeitsschritt 103 erfolgt eine Berechnung der Verbindungsoberfläche 20 zwischen dem zumindest einen Prothesenzahn 2 und der Stützstruktur 17 zur Positionierung der Trägerstruktur 4, 5, 14, 15 einerseits und Prothesenbasis 3 und der Trägerstruktur 4, 5, 14, 15 der dentalen Teilprothese 1 andererseits im virtuellen dreidimensionalen Modell. Zudem erfolgt eine Berechnung der in einem Fräskörper 6, 16 herzustellenden Oberfläche 19 aufweisend die Verbindungsoberfläche 20 mit der Stützstruktur 17, gegebenenfalls mit einer separaten Halterungsstruktur für die Stützstruktur 17, beispielsweise in Form von vorstehenden Stegen, zum Anlegen der Trägerstruktur 4, 5, 14, 15 mit CAD-Verfahren.

In einem fünften Arbeitsschritt 104 wird ein passender physischer Fräskörper 6, 16 bereitgestellt und in einer CAM-Vorrichtung befestigt.

Basierend auf den im zweiten und vierten und gegebenenfalls auch im dritten Arbeitsschritt erzeugten virtuellen Modellen wird in einem sechsten Arbeitsschritt 105 die herzustellende Oberfläche 19, 20 in einer Fräskörperoberfläche im Fräskörper 6, 16 mit einem subtraktiven CAM-Verfahren hergestellt. Dabei wird die Verbindungsoberfläche 20 mit dem CAM-Verfahren erzeugt. Dabei entsteht ein Hohlraum in der Oberfläche des Fräskörpers 6, 16.

In einem siebten Arbeitsschritt 106 wird die analog oder mit CAM-Verfahren hergestellte Trägerstruktur 4, 5, 14, 15 an die bearbeitete Oberfläche 19, 20 des Fräskörpers 6, 16 angelegt beziehungsweise dort befestigt.

In einem nachfolgenden achten Arbeitsschritt 107 wird ein fluider polymerisierbarer Kunststoff in den Hohlraum eingefüllt oder eingestopft.

In einem neunten Arbeitsschritt 108 erfolgt ein Aushärten oder Teilhärten des fluiden polymerisierbaren Kunststoffs und damit eine feste Verbindung des bearbeiteten Fräskörpers 6, 16 mit der Trägerstruktur 4, 5, 14, 15.

In einem zehnten Arbeitsschritt 109 erfolgt ein subtraktives Herausarbeiten der dentalen Teilprothese 1 aus dem im neunten Arbeitsschritt 108 erzeugten Verbund.

Optional kann anschließend in einem elften Arbeitsschritt 110 ein Nachhärten oder Endhärten der dentalen Teilprothese 1 erfolgen.

In einem optionalen zwölften Arbeitsschritt 111 kann eine Endbearbeitung der dentalen Teilprothese 1 erfolgen, beispielweise durch eine Oberflächenvergütung und/oder Politur der dentalen Teilprothese 1.

Die in der voranstehenden Beschreibung, sowie den Ansprüchen, Figuren und Ausführungsbeispielen offenbarten Merkmale der Erfindung können sowohl einzeln als auch in jeder beliebigen Kombination für die Verwirklichung der Erfindung in ihren verschiedenen Ausführungsformen wesentlich sein.

### Bezugszeichenliste

- 1: Dentale Teilprothese
- 2: Prothesenzahn
- 3: Prothesenbasis
- 4, 14: Trägerstruktur (Retention)
- 5, 15: Trägerstruktur (Klammer)
- 6, 16: Fräskörper
- 7: Kieferkamm im Mundraum
- 8: Zahn im Mundraum
- 17: Stützstruktur
- 18: Zahn im Modell
- 19: Modell des Mundraums
- 20: Verbindungsoberfläche
- 21: Fräskörper
- 22: Vollkörper
- 24: Hohlraum
- 26: Boden
- 28: Wandung
- 29: Markierung
- 30: Halterung
- 100: Arbeitsschritt: Berechnung eines virtuellen 3D-Modells einer dentalen Teilprothese
- 101: Arbeitsschritt: Berechnung virtueller 3D-Modelle Prothesenzähne und Prothesenbasis gegebenenfalls mit Trägerstruktur
- 102: Arbeitsschritt: Herstellen der Trägerstruktur und gegebenenfalls erzeugen eines virtuellen 3D-Modells der Trägerstruktur
- 103: Arbeitsschritt: Berechnung der in einem Fräskörper herzustellenden Oberfläche aufweisend die Verbindungsoberfläche mit CAD-Verfahren
- 104: Arbeitsschritt: Bereitstellen des Fräskörpers
- 105: Arbeitsschritt: Herstellen der Verbindungsoberfläche und eines Hohlraums im Fräskörper mit subtraktiven CAM-Verfahren
- 106: Arbeitsschritt: Anlegen oder Befestigen der Trägerstruktur an dem bearbeiteten Fräskörper
- 107: Arbeitsschritt: Einfüllen von fluidem polymerisierbarem Kunststoff in den Hohlraum im Fräskörper
- 108: Arbeitsschritt: Aushärten des fluiden polymerisierbaren Kunststoffs
- 109: Arbeitsschritt: Subtraktives Herausarbeiten der dentalen Teilprothese mit CAM-Verfahren
- 110: Optionaler Arbeitsschritt: Nachhärten oder Endhärten der dentalen Teilprothese
- 111: Optionaler Arbeitsschritt: Endbearbeitung der dentalen Teilprothese

## Patentansprüche

1. Verfahren zur Herstellung einer dentalen Teilprothese (1), wobei die dentale Teilprothese (1) zumindest einen Prothesenzahn (2), eine Prothesenbasis (3) und eine Trägerstruktur (4, 5, 14, 15) aufweist, wobei die Prothesenbasis (3) einen zahnfleischfarbenen Kunststoff aufweist und wobei der zumindest eine Prothesenzahn (2), die Prothesenbasis (3) und die Trägerstruktur (4, 5, 14, 15) bei dem Verfahren fest miteinander verbunden werden, wobei das Verfahren durch die folgenden Schritte gekennzeichnet ist
A) Digitale Konstruktion eines virtuellen dreidimensionalen Modells der dentalen Teilprothese (1) mit oder ohne die Trägerstruktur (4, 5, 14, 15) oder Anwenden eines vorhandenen virtuellen dreidimensionalen Modells der dentalen Teilprothese (1) mit oder ohne der Trägerstruktur (4, 5, 14, 15);
B1) Erzeugen eines virtuellen dreidimensionalen Modells des zumindest einen Prothesenzahns (2), eines virtuellen dreidimensionalen Modells der Prothesenbasis (3) und eines virtuellen dreidimensionalen Modells der Trägerstruktur (4, 5, 14, 15) anhand des virtuellen dreidimensionalen Modells der dentalen Teilprothese (1) mit Trägerstruktur (4, 5, 14, 15), so dass das virtuelle dreidimensionale Modell des zumindest einen Prothesenzahns (2), das virtuelle dreidimensionale Modell der Prothesenbasis (3) und das virtuelle dreidimensionale Modell der Trägerstruktur (4, 5, 14, 15) voneinander separate Teilvolumen des virtuellen dreidimensionalen Modells der dentalen Teilprothese (1) mit Trägerstruktur (4, 5, 14, 15) ergeben, oder
B2) Erzeugen eines virtuellen dreidimensionalen Modells des zumindest einen Prothesenzahns (2) und eines virtuellen dreidimensionalen Modells der Prothesenbasis (3) anhand des virtuellen dreidimensionalen Modells der dentalen Teilprothese (1) ohne Trägerstruktur (4, 5, 14, 15), so dass das virtuelle dreidimensionale Modell des zumindest einen Prothesenzahns (2) und das virtuelle dreidimensionale Modell der Prothesenbasis (3) voneinander separate Teilvolumen des virtuellen dreidimensionalen Modells der dentalen Teilprothese (1) ohne Trägerstruktur (4, 5, 14, 15) ergeben;
C1) Herstellen der Trägerstruktur (4, 5, 14, 15) anhand des virtuellen dreidimensionalen Modells der Trägerstruktur (4, 5, 14, 15) mit einem CAM-Verfahren oder
C2) Herstellen der Trägerstruktur (4, 5, 14, 15) mit einem analogen Verfahren durch Anpassung am Patienten oder durch Anpassung an einem physischen Modell des Mundraums des Patienten und Einscannen der Oberfläche der analog hergestellten Trägerstruktur (4, 5, 14, 15) und Erzeugen eines virtuellen dreidimensionalen Modells der Trägerstruktur (4, 5, 14, 15) aus dem Scan der Oberfläche der analog hergestellten Trägerstruktur (4, 5, 14, 15), wobei das aus dem Scan erzeugte virtuelle dreidimensionale Modell der Trägerstruktur (4, 5, 14, 15) durch digitale Bearbeitung zu dem virtuellen dreidimensionalen Modell der dentalen Teilprothese (1) ohne Trägerstruktur (4, 5, 14, 15) ergänzt wird und dadurch ein virtuelles dreidimensionales Modell der dentalen Teilprothese (1) mit Trägerstruktur (4, 5, 14, 15) erzeugt wird, und das aus dem Scan erzeugte virtuelle dreidimensionale Modell der Trägerstruktur (4, 5, 14, 15) durch digitale Bearbeitung bereichsweise von dem virtuellen dreidimensionalen Modell des zumindest einen Prothesenzahns (2) subtrahiert wird oder bereichsweise von dem virtuellen dreidimensionalen Modell des zumindest einen Prothesenzahns (2) und von dem virtuellen dreidimensionalen Modell der Prothesenbasis (3) bereichsweise subtrahiert wird;
D) Bereitstellen eines Fräskörpers (6, 16, 21) zur Herstellung des zumindest einen Prothesenzahns (2), wobei der Fräskörper (6, 16, 21) aus einem für Prothesenzähne geeigneten Material besteht;
E) Herstellen einer Verbindungsoberfläche (20) zwischen dem zumindest einen Prothesenzahn (2) und einer Stützstruktur (17) zur Positionierung der Trägerstruktur (4, 5, 14, 15) einerseits und der Prothesenbasis (3) und der Trägerstruktur (4, 5, 14, 15) andererseits in einer Oberfläche des Fräskörpers (6, 16, 21) mit Hilfe eines subtraktiven CAM-Verfahrens nach Maßgabe des virtuellen dreidimensionalen Modells des zumindest einen Prothesenzahns (2), des virtuellen dreidimensionalen Modells der Prothesenbasis (3) und des virtuellen dreidimensionalen Modells der Trägerstruktur (4, 5, 14, 15);
F) nach Schritt E) Anordnen oder Befestigen der Trägerstruktur (4, 5, 14, 15) an der Verbindungsoberfläche (20) des Fräskörpers (6, 16, 21);
G) nach Schritt F) Einfüllen zumindest eines fluiden polymerisierbaren Kunststoffs auf Bereiche der Verbindungsoberfläche (20) und in das in Schritt E) abgetragene Volumen in der Oberfläche des Fräskörpers (6, 16, 21);
H) nach Schritt G) Aushärten oder Teilhärten des zumindest einen fluiden polymerisierbaren Kunststoffs, wobei beim Aushärten ein ausgehärtetes Kunststoffmaterial entsteht oder beim Teilhärten ein teilweise polymerisiertes Kunststoffmaterial entsteht, wobei das ausgehärtete Kunststoffmaterial oder das teilweise polymerisierte Kunststoffmaterial die Trägerstruktur (4, 5, 14, 15) und das Material des Fräskörpers (6, 16, 21) miteinander verbindet; und
I) nach Schritt H) subtraktives Bearbeiten des ausgehärteten oder teilweise polymerisierten Kunststoffmaterials und des Fräskörpers (6, 16, 21) mit einem CAM-Verfahren nach Maßgabe des virtuellen Modells einer äußeren Oberfläche der dentalen Teilprothese (1), so dass die dentale Teilprothese (1) aufweisend die Trägerstruktur (4, 5, 14, 15), das ausgehärtete oder teilweise polymerisierte Kunststoffmaterial und das Material des Fräskörpers (6, 16, 21) subtraktiv herausgearbeitet wird.

2. Verfahren nach Anspruch 1, **dadurch gekennzeichnet, dass**
das Erzeugen des virtuellen dreidimensionalen Modells des zumindest einen Prothesenzahns (2), des virtuellen dreidimensionalen Modells der Prothesenbasis (3) und des virtuellen dreidimensionalen Modells der Trägerstruktur (4, 5, 14, 15) anhand des virtuellen dreidimensionalen Modells der dentalen Teilprothese (1) in Schritt B1) derart erfolgt, dass das virtuelle dreidimensionale Modell des zumindest einen Prothesenzahns (2), das virtuelle dreidimensionale Modell der Prothesenbasis (3) und das virtuelle dreidimensionale Modell der Trägerstruktur (4, 5, 14, 15) zusammengesetzt das virtuelle dreidimensionale Modell der dentalen Teilprothese (1) ergeben oder
das Erzeugen des virtuellen dreidimensionalen Modells des zumindest einen Prothesenzahns (2) und des virtuellen dreidimensionalen Modells der Prothesenbasis (3) anhand des virtuellen dreidimensionalen Modells der dentalen Teilprothese (1) ohne Trägerstruktur (4, 5, 14, 15) in Schritt B2) derart erfolgt, dass das virtuelle dreidimensionale Modell des zumindest einen Prothesenzahns (2) und das virtuelle dreidimensionale Modell der Prothesenbasis (3) zusammengesetzt das virtuelle dreidimensionale Modell der dentalen Teilprothese (1) ohne Trägerstruktur (4, 5, 14, 15) ergeben.

3. Verfahren nach Anspruch 1 oder 2, **dadurch gekennzeichnet, dass**
in Schritt B2) ein virtuelles dreidimensionales Modell einer Trägerstruktur (4, 5, 14, 15) mit CAD konstruiert wird, wobei die CAD-Konstruktion unter Anwendung eines virtuellen dreidimensionalen Modells des Mundraums eines Patienten und unter Anwendung des virtuellen dreidimensionalen Modells der dentalen Teilprothese (1) ohne Trägerstruktur (4, 5, 14, 15) erfolgt und wobei dieses mit CAD konstruierte virtuelle dreidimensionale Modell der Trägerstruktur (4, 5, 14, 15) in Schritt C1) zum Herstellen der Trägerstruktur (4, 5, 14, 15) verwendet wird.

4. Verfahren nach einem der vorangehenden Ansprüche, **dadurch gekennzeichnet, dass**
die Trägerstruktur (4, 5, 14, 15) aus einem Material mit einer größeren Härte und/oder Elastizität als vollvernetztes PMMA besteht oder hergestellt wird und/oder
die Trägerstruktur (4, 5, 14, 15) aus Metall, Keramik, rostfreiem Edelstahl, Titan oder einer Titanlegierung hergestellt wird.

5. Verfahren nach einem der vorangehenden Ansprüche, **dadurch gekennzeichnet, dass** in Schritt I) das ausgehärtete oder teilweise polymerisierte Kunststoffmaterial mit einem CAM-Verfahren derart subtraktiv bearbeitet werden, dass die Trägerstruktur (4, 5, 14, 15) teilweise freigelegt wird oder
in Schritt I) das ausgehärtete oder teilweise polymerisierte Kunststoffmaterial und der Fräskörper (6, 16, 21) derart mit einem CAM-Verfahren derart subtraktiv bearbeitet werden, dass die Trägerstruktur (4, 5, 14, 15) teilweise freigelegt wird.

6. Verfahren nach einem der vorangehenden Ansprüche, **dadurch gekennzeichnet, dass** nach Schritt G) oder nach Schritt H) ein Schritt J) erfolgt, bei dem das teilweise polymerisierte Kunststoffmaterial endgehärtet wird, insbesondere durch Lichtpolymerisation endgehärtet wird, wobei vorzugsweise im Anschluss an Schritt I) und J) eine Politur der Oberfläche der dentalen Teilprothese (1) und/oder eine Oberflächenveredelung der dentalen Teilprothese (1) durchgeführt wird.

7. Verfahren nach einem der vorangehenden Ansprüche, **dadurch gekennzeichnet, dass** an dem Fräskörper (6, 16, 21) eine umlaufende Wandung (28) angeordnet ist, wobei die umlaufende Wandung (28) in den Schritten D) bis G) erhalten bleibt, wobei bevorzugt in Schritt G) die umlaufende Wandung (28) in Kontakt mit dem zumindest einen fluiden polymerisierbaren Kunststoff kommt, besonders bevorzugt der zumindest eine fluide polymerisierbare Kunststoff derart auf die Verbindungsoberfläche (20) und in das in Schritt E) abgetragene Volumen in der Oberfläche des Fräskörpers (6, 16, 21) gefüllt wird, dass der Pegel bis an die umlaufende Wandung (28) steigt, aber unterhalb der umlaufenden Wandung (28) bleibt.

8. Verfahren nach einem der vorangehenden Ansprüche, **dadurch gekennzeichnet, dass** in Schritt G) das Einfüllen des zumindest einen fluiden polymerisierbaren Kunststoffs auf die Verbindungsoberfläche (20) und in das in Schritt E) abgetragenen Volumen in dem Fräskörper (6, 16, 21) derart erfolgt, dass der zumindest eine fluide polymerisierbare Kunststoff den bearbeiteten Fräskörper (6, 16, 21) mit der Trägerstruktur (4, 5, 14, 15) verbindet, wobei bevorzugt der zumindest eine fluiden polymerisierbaren Kunststoff die in Schritt E) hergestellte Verbindungsoberfläche (20) im Fräskörper (6, 16, 21) außer an den von der Trägerstruktur (4, 5, 14, 15) abgedeckten Stellen der Stützstruktur (17) vollständig benetzt und/oder zumindest das in Schritt E) abgetragene Volumen in der Oberfläche des Fräskörpers (6, 16, 21) vollständig, insbesondere ohne Gaseinschlüsse, mit dem zumindest einen fluiden polymerisierbaren Kunststoff aufgefüllt wird.

9. Verfahren nach einem der vorangehenden Ansprüche, **dadurch gekennzeichnet, dass**
in Schritt I) das subtraktive Bearbeiten des ausgehärteten oder teilweise polymerisierten Kunststoffmaterials und des Fräskörpers (6, 16, 21) aus Richtung der Unterseite des Fräskörpers (6, 16, 21), die der in Schritt E) bearbeiteten Oberfläche des Fräskörpers (6, 16, 21) gegenüberliegt, mit dem CAM-Verfahren nach Maßgabe der okklusalen Oberfläche und der oralen Oberfläche des virtuellen Modells der dentalen Teilprothese (1) erfolgt und/oder
in Schritt I) ein subtraktives Bearbeiten des ausgehärteten oder teilweise polymerisierten Kunststoffmaterials oder des ausgehärteten oder teilweise polymerisierten Kunststoffmaterials und des Fräskörpers (6, 16, 21) aus Richtung der in Schritt E) bearbeiteten Oberfläche des Fräskörpers (6, 16, 21) mit dem CAM-Verfahren nach Maßgabe basalen Oberfläche des virtuellen Modells der dentalen Teilprothese (1) erfolgt.

10. Verfahren nach einem der vorangehenden Ansprüche, **dadurch gekennzeichnet, dass** beim Erzeugen des virtuellen dreidimensionalen Modells des zumindest einen Prothesenzahns (2) in Schritt B1) oder B2) zumindest eine Retention der Trägerstruktur vorgesehen wird, wobei die zumindest eine Retention von dem zumindest einen Prothesenzahn beabstandet ist und wobei die zumindest eine Retention nach Schritt H) von dem ausgehärteten Kunststoffmaterial umgeben ist, wobei vorzugsweise die Trägerstruktur (4, 5, 14, 15) zumindest eine Klammer (5, 15) zur Verbindung mit Zähnen (8) des Patienten aufweist, wobei die zumindest eine Klammer (5, 15) mit der zumindest einen Retention (4, 14) verbunden ist.

11. Verfahren nach einem der vorangehenden Ansprüche, **dadurch gekennzeichnet, dass** die Trägerstruktur (4, 5, 14, 15) nach Schritt C1) oder C2) und vor Schritt F) an den Oberflächen, die an die Verbindungsoberfläche (20) des bearbeiteten Fräskörpers (6, 16, 21) angelegt werden, vorbehandelt werden, bevorzugt durch Aufrauen, Auftragen eines Verbindungmittels, Reinigung und/oder chemisches Ätzen vorbehandelt werden.

12. Verfahren nach einem der vorangehenden Ansprüche, **dadurch gekennzeichnet, dass** beim subtraktiven Bearbeiten des ausgehärteten oder teilweise polymerisierten Kunststoffmaterials und des Fräskörpers (6, 16, 21) in Schritt I) ein Offset zur Beabstandung des Werkzeugs zum Umsetzen des CAM-Verfahrens in Bezug auf die Trägerstruktur (4, 5, 14, 15) vorgesehen wird.

13. Dentale Teilprothese (1) hergestellt mit einem Verfahren nach einem der vorangehenden Ansprüche.

14. Vorrichtung zur Umsetzung eines Verfahrens nach einem der Ansprüche 1 bis 12, die Vorrichtung aufweisend
ein Verbindungsoberflächen-Berechnungsmodul zur Berechnung einer Verbindungsoberfläche (20) zwischen dem zumindest einen Prothesenzahn (2) und einer Stützstruktur (17) zur Positionierung der Trägerstruktur (4, 5, 14, 15) einerseits und der Prothesenbasis (3) und der Trägerstruktur (4, 5, 14, 15) andererseits nach Maßgabe eines virtuellen dreidimensionalen Modells einer Form der Verbindungsoberfläche (20) des zumindest einen Prothesenzahns (2) zu der Prothesenbasis (3) und zu der Trägerstruktur (4, 5, 14, 15) in der dentalen Teilprothese (1);
ein Verbindungsoberflächen-Steuerungsmodul für eine CAM-Vorrichtung programmiert zur Steuerung der subtraktiven Herstellung der mit dem Verbindungsoberflächen-Berechnungsmodul berechneten Verbindungsoberfläche (20) in einem Fräskörper (6, 16, 21); und
ein Teilprothesen-Steuerungsmodul für eine CAM-Vorrichtung programmiert zur Steuerung der subtraktiven Herstellung der Oberfläche der herzustellenden dentalen Teilprothese (1) nach Maßgabe des virtuellen Modells einer äußeren Oberfläche der dentalen Teilprothese (1).

15. Vorrichtung nach Anspruch 14, **dadurch gekennzeichnet, dass**
die Vorrichtung ein Trägerstruktur-Berechnungsmodul aufweist, das die Berechnung einer Trägerstruktur (4, 5, 14, 15) zur Verbindung mit einer subtraktiv herzustellenden Verbindungsoberfläche (20) des Fräskörpers (6, 16, 21) durchführt, wobei die Trägerstruktur (4, 5, 14, 15) derart berechenbar ist, dass sie ein zu der Verbindungsoberfläche (20) passendes Anlegestück bildet, wobei vorzugsweise das Verbindungsoberflächen-Steuerungsmodul für eine CAM-Vorrichtung programmiert ist zur Steuerung der subtraktiven Herstellung der mit dem Verbindungsoberflächen-Berechnungsmodul und dem Trägerstruktur-Berechnungsmodul berechneten Verbindungsoberfläche (20) in dem Fräskörper (6, 16, 21).

## Claims

1. A method for producing a partial dental prosthesis (1), the partial dental prosthesis (1) comprising at least one prosthetic tooth (2), a prosthetic base (3), and a carrier structure (4, 5, 14, 15), the prosthetic base (3) comprising a gum-colored plastics material and the at least one prosthetic tooth (2), the prosthetic base (3), and the carrier structure (4, 5, 14, 15) being securely interconnected in the method, the method being **characterized by** the following steps
A) digitally constructing a virtual three-dimensional model of the partial dental prosthesis (1) with or without the carrier structure (4, 5, 14, 15) or applying an existing virtual three-dimensional model of the partial dental prosthesis (1) with or without the carrier structure (4, 5, 14, 15);
B1) generating a virtual three-dimensional model of the at least one prosthetic tooth (2), a virtual three-dimensional model of the prosthetic base (3), and a virtual three-dimensional model of the carrier structure (4, 5, 14, 15) on the basis of the virtual three-dimensional model of the partial dental prosthesis (1) with the carrier structure (4, 5, 14, 15), such that the virtual three-dimensional model of the at least one prosthetic tooth (2), the virtual three-dimensional model of the prosthetic base (3), and the virtual three-dimensional model of the carrier structure (4, 5, 14, 15) result in partial volumes of the virtual three-dimensional model of the partial dental prosthesis (1) with the carrier structure (4, 5, 14, 15) that are separate from one another, or
B2) generating a virtual three-dimensional model of the at least one prosthetic tooth (2) and a virtual three-dimensional model of the prosthetic base (3) on the basis of the virtual three-dimensional model of the partial dental prosthesis (1) without the carrier structure (4, 5, 14, 15), such that the virtual three-dimensional model of the at least one prosthetic tooth (2) and the virtual three-dimensional model of the prosthetic base (3) result in partial volumes of the virtual three-dimensional model of the partial dental prosthesis (1) without the carrier structure (4, 5, 14, 15) that are separate from one another;
C1) producing the carrier structure (4, 5, 14, 15) on the basis of the virtual three-dimensional model of the carrier structure (4, 5, 14, 15) using a CAM method or
C2) producing the carrier structure (4, 5, 14, 15) using an analog method by adjusting to the patient or by adjusting to a physical model of the patient's oral cavity and scanning the surface of the carrier structure (4, 5, 14, 15) produced in an analog manner, and generating a virtual three-dimensional model of the carrier structure (4, 5, 14, 15) from the scan of the surface of the carrier structure (4, 5, 14, 15) produced in an analog manner, the virtual three-dimensional model of the carrier structure (4, 5, 14, 15) generated from the scan being added to the virtual three-dimensional model of the partial dental prosthesis (1) without the carrier structure (4, 5, 14, 15) by digital processing and a virtual three-dimensional model of the partial dental prosthesis (1) with the carrier structure (4, 5, 14, 15) thus being generated, and the virtual three-dimensional model of the carrier structure (4, 5, 14, 15) generated from the scan being subtracted in regions from the virtual three-dimensional model of the at least one prosthetic tooth (2) by digital processing or being subtracted in regions from the virtual three-dimensional model of the at least one prosthetic tooth (2) and in regions from the virtual three-dimensional model of the prosthetic base (3);
D) providing a milling body (6, 16, 21) for producing the at least one prosthetic tooth (2), the milling body (6, 16, 21) consisting of a material suitable for prosthetic teeth;
E) producing a connecting surface (20) between the at least one prosthetic tooth (2) and a support structure (17) for positioning the carrier structure (4, 5, 14, 15) on one hand and the prosthetic base (3) and the carrier structure (4, 5, 14, 15) on the other hand in a surface of the milling body (6, 16, 21) by means of a subtractive CAM method in line with the virtual three-dimensional model of the at least one prosthetic tooth (2), the virtual three-dimensional model of the prosthetic base (3), and the virtual three-dimensional model of the carrier structure (4, 5, 14, 15);
F) after step E), arranging or fastening the carrier structure (4, 5, 14, 15) on the connecting surface (20) of the milling body (6, 16, 21);
G) after step F), introducing at least one fluid polymerizable plastics material onto regions of the connecting surface (20) and into the volume removed in step E) in the surface of the milling body (6, 16, 21);
H) after step G), curing or partially curing the at least one fluid polymerizable plastics material, a cured plastics material resulting during the curing or a partially polymerized plastics material resulting during the partial curing, the cured plastics material or the partially polymerized plastics material interconnecting the carrier structure (4, 5, 14, 15) and the material of the milling body (6, 16, 21); and
I) after step H), subtractively machining the cured or partially polymerized plastics material and the milling body (6, 16, 21) using a CAM method in line with the virtual model of an outer surface of the partial dental prosthesis (1), such that the partial dental prosthesis (1) comprising the carrier structure (4, 5, 14, 15), the cured or partially polymerized plastics material, and the material of the milling body (6, 16, 21) is subtractively worked out.

2. The method according to Claim 1, **characterized in that**
generating the virtual three-dimensional model of the at least one prosthetic tooth (2), the virtual three-dimensional model of the prosthetic base (3), and the virtual three-dimensional model of the carrier structure (4, 5, 14, 15) on the basis of the virtual three-dimensional model of the partial dental prosthesis (1) in step B1) is performed such that the virtual three-dimensional model of the at least one prosthetic tooth (2), the virtual three-dimensional model of the prosthetic base (3), and the virtual three-dimensional model of the carrier structure (4, 5, 14, 15) result in the virtual three-dimensional model of the partial dental prosthesis (1) when combined, or
generating the virtual three-dimensional model of the at least one prosthetic tooth (2) and the virtual three-dimensional model of the prosthetic base (3) on the basis of the virtual three-dimensional model of the partial dental prosthesis (1) without the carrier structure (4, 5, 14, 15) in step B2) is performed such that the virtual three-dimensional model of the at least one prosthetic tooth (2) and the virtual three-dimensional model of the prosthetic base (3) result in the virtual three-dimensional model of the partial dental prosthesis (1) without the carrier structure (4, 5, 14, 15) when combined.

3. The method according to Claim 1 or 2, **characterized in that**
in step B2), a virtual three-dimensional model of a carrier structure (4, 5, 14, 15) is constructed using CAD, the CAD construction taking place by applying a virtual three-dimensional model of the patient's oral cavity and by applying the virtual three-dimensional model of the partial dental prosthesis (1) without the carrier structure (4, 5, 14, 15), and this virtual three-dimensional model of the carrier structure (4, 5, 14, 15) constructed using CAD being used in step C1) to produce the carrier structure (4, 5, 14, 15).

4. The method according to any one of the preceding claims, **characterized in that**
the carrier structure (4, 5, 14, 15) consists of or is produced from a material having a greater hardness and/or elasticity than fully crosslinked PMMA and/or
the carrier structure (4, 5, 14, 15) is produced from metal, ceramic, stainless steel, titanium, or a titanium alloy.

5. The method according to any one of the preceding claims, **characterized in that**
in step I), the cured or partially polymerized plastics material is subtractively machined using a CAM method such that the carrier structure (4, 5, 14, 15) is partially exposed or
in step I), the cured or partially polymerized plastics material and the milling body (6, 16, 21) are subtractively machined using a CAM method such that the carrier structure (4, 5, 14, 15) is partially exposed.

6. The method according to any one of the preceding claims, **characterized in that** after step G) or after step H), a step J) is performed in which the partially polymerized plastics material undergoes final curing, in particular undergoes final curing by light polymerization, and, following steps I) and J), polishing of the surface of the partial dental prosthesis (1) and/or surface finishing of the partial dental prosthesis (1) is preferably carried out.

7. The method according to any one of the preceding claims, **characterized in that** a circumferential wall (28) is arranged on the milling body (6, 16, 21), the circumferential wall (28) remaining in steps D) to G), preferably, in step G), the circumferential wall (28) coming into contact with the at least one fluid polymerizable plastics material, particularly preferably the at least one fluid polymerizable plastics material being introduced onto the connecting surface (20) and into the volume removed in step E) in the surface of the milling body (6, 16, 21) such that the level rises up to the circumferential wall (28), but remains below the circumferential wall (28).

8. The method according to any one of the preceding claims, **characterized in that** in step G), the at least one fluid polymerizable plastics material is introduced onto the connecting surface (20) and into the volume removed in step E) in the milling body (6, 16, 21) such that the at least one fluid polymerizable plastics material connects the machined milling body (6, 16, 21) to the carrier structure (4, 5, 14, 15), the at least one fluid polymerizable plastics material preferably completely wetting the connecting surface (20) produced in step E) in the milling body (6, 16, 21) except for the points of the support structure (17) covered by the carrier structure (4, 5, 14, 15) and/or at least the volume removed in step E) in the surface of the milling body (6, 16, 21) being completely filled with the at least one fluid polymerizable plastics material, in particular without any entrapped gas.

9. The method according to any one of the preceding claims, **characterized in that**
in step I), subtractive machining of the cured or partially polymerized plastics material and the milling body (6, 16, 21) is performed from the direction of the underside of the milling body (6, 16, 21), which is opposite the surface of the milling body (6, 16, 21) machined in step E), using the CAM method in line with the occlusal surface and the oral surface of the virtual model of the partial dental prosthesis (1) and/or
in step I), subtractive machining of the cured or partially polymerized plastics material or of the cured or partially polymerized plastics material and the milling body (6, 16, 21) is performed from the direction of the surface of the milling body (6, 16, 21) machined in step E), using the CAM method in line with the basal surface of the virtual model of the partial dental prosthesis (1).

10. The method according to any one of the preceding claims, **characterized in that** when generating the virtual three-dimensional model of the at least one prosthetic tooth (2) in step B1) or B2), at least one retention of the carrier structure is provided, the at least one retention being spaced apart from the at least one prosthetic tooth and the at least one retention being surrounded by the cured plastics material after step H), the carrier structure (4, 5, 14, 15) preferably comprising at least one crib (5, 15) for connecting to the patient's teeth (8), the at least one crib (5, 15) being connected to the at least one retention (4, 14).

11. The method according to any one of the preceding claims, **characterized in that** after step C1) or C2) and before step F), the carrier structure (4, 5, 14, 15) is pretreated on the surfaces that are applied to the connecting surface (20) of the machined milling body (6, 16, 21), preferably by roughening, applying a connector, cleaning, and/or chemical etching.

12. The method according to any one of the preceding claims, **characterized in that** during the subtractive machining of the cured or partially polymerized plastics material and the milling body (6, 16, 21) in step I), an offset is provided relative to the carrier structure (4, 5, 14, 15) for spacing the tool for implementing the CAM method.

13. A partial dental prosthesis (1) produced using a method according to any one of the preceding claims.

14. A device for implementing a method according to any one of Claims 1 to 12, the device comprising
a connecting-surface calculation module for calculating a connecting surface (20) between the at least one prosthetic tooth (2) and a support structure (17) for positioning the carrier structure (4, 5, 14, 15) on one hand and the prosthetic base (3) and the carrier structure (4, 5, 14, 15) on the other hand in line with a virtual three-dimensional model of a shape of the connecting surface (20) of the at least one prosthetic tooth (2) relative to the prosthetic base (3) and the carrier structure (4, 5, 14, 15) in the partial dental prosthesis (1);
a connecting-surface control module for a CAM device programmed to control the subtractive production of the connecting surface (20) calculated using the connecting-surface calculation module in a milling body (6, 16, 21); and
a partial-prosthesis control module for a CAM device programmed to control the subtractive production of the surface of the partial dental prosthesis (1) to be produced in line with the virtual model of an outer surface of the partial dental prosthesis (1).

15. The device according to Claim 14, **characterized in that**
the device comprising a carrier-structure calculation module, which carries out the calculation of a carrier structure (4, 5, 14, 15) for connection to a connecting surface (20) of the milling body (6, 16, 21) to be subtractively produced, the carrier structure (4, 5, 14, 15) being able to be calculated such that it forms an application piece that fits to the connecting surface (20), the connecting-surface control module for a CAM device preferably being programmed to control the subtractive production of the connecting surface (20) in the milling body (6, 16, 21) calculated by the connecting-surface calculation module and the carrier-structure calculation module.

## Revendications

1. Procédé de fabrication d'une prothèse dentaire partielle (1), la prothèse dentaire partielle (1) comprenant au moins une dent prothétique (2), une base prothétique (3) et une structure porteuse (4, 5, 14, 15), la base prothétique (3) comprenant un matériau plastique de couleur gingivale et l'au moins une dent prothétique (2), la base prothétique (3) et la structure porteuse (4, 5, 14, 15) étant solidement reliées entre elles dans le procédé, le procédé étant **caractérisé par** les étapes suivantes
A) la construction numérique d'un modèle tridimensionnel virtuel de la prothèse dentaire partielle (1) avec ou sans la structure porteuse (4, 5, 14, 15) ou l'application d'un modèle tridimensionnel virtuel existant de la prothèse dentaire partielle (1) avec ou sans la structure porteuse (4, 5, 14, 15) ;
B1) la génération d'un modèle tridimensionnel virtuel de l'au moins une dent prothétique (2), d'un modèle tridimensionnel virtuel de la base prothétique (3) et d'un modèle tridimensionnel virtuel de la structure porteuse (4, 5, 14, 15) sur la base du modèle tridimensionnel virtuel de la prothèse dentaire partielle (1) avec la structure porteuse (4, 5, 14, 15), de sorte que le modèle tridimensionnel virtuel de l'au moins une dent prothétique (2), le modèle tridimensionnel virtuel de la base prothétique (3) et le modèle tridimensionnel virtuel de la structure porteuse (4, 5, 14, 15) aboutissent à des volumes partiels du modèle tridimensionnel virtuel de la prothèse dentaire partielle (1) avec la structure porteuse (4, 5, 14, 15) qui sont séparés les uns des autres, ou
B2) la génération d'un modèle tridimensionnel virtuel de l'au moins une dent prothétique (2) et d'un modèle tridimensionnel virtuel de la base prothétique (3) sur la base du modèle tridimensionnel virtuel de la prothèse dentaire partielle (1) sans la structure porteuse (4, 5, 14, 15), de sorte que le modèle tridimensionnel virtuel de l'au moins une dent prothétique (2) et le modèle tridimensionnel virtuel de la base prothétique (3) aboutissent à des volumes partiels du modèle tridimensionnel virtuel de la prothèse dentaire partielle (1) sans la structure porteuse (4, 5, 14, 15) qui sont séparés les uns des autres ;
C1) la fabrication de la structure porteuse (4, 5, 14, 15) sur la base du modèle tridimensionnel virtuel de la structure porteuse (4, 5, 14, 15) en utilisant une méthode FAO ou
C2) la fabrication de la structure porteuse (4, 5, 14, 15) en utilisant une méthode analogique par ajustement au patient ou par ajustement à un modèle physique de la cavité buccale du patient et numérisation de la surface de la structure porteuse (4, 5, 14, 15) fabriquée de manière analogique, et la génération d'un modèle tridimensionnel virtuel de la structure porteuse (4, 5, 14, 15) à partir de la numérisation de la surface de la structure porteuse (4, 5, 14, 15) fabriquée de manière analogique, le modèle tridimensionnel virtuel de la structure porteuse (4, 5, 14, 15) généré à partir de la numérisation étant ajouté au modèle tridimensionnel virtuel de la prothèse dentaire partielle (1) sans la structure porteuse (4, 5, 14, 15) par traitement numérique, et un modèle tridimensionnel virtuel de la prothèse dentaire partielle (1) avec la structure porteuse (4, 5, 14, 15) étant ainsi généré, et le modèle tridimensionnel virtuel de la structure porteuse (4, 5, 14, 15) généré à partir de la numérisation étant soustrait dans des régions du modèle tridimensionnel virtuel de l'au moins une dent prothétique (2) par traitement numérique ou étant soustrait dans des régions du modèle tridimensionnel virtuel de l'au moins une dent prothétique (2) et dans des régions du modèle tridimensionnel virtuel de la base prothétique (3) ;
D) la fourniture d'un corps de fraisage (6, 16, 21) pour fabriquer l'au moins une dent prothétique (2), le corps de fraisage (6, 16, 21) étant constitué d'un matériau adapté aux dents prothétiques ;
E) la fabrication d'une surface de liaison (20) entre l'au moins une dent prothétique (2) et une structure de support (17) pour positionner la structure porteuse (4, 5, 14, 15) d'une part et la base prothétique (3) et la structure porteuse (4, 5, 14, 15) d'autre part dans une surface du corps de fraisage (6, 16, 21) au moyen d'une méthode FAO soustractive en conformité avec le modèle tridimensionnel virtuel de l'au moins une dent prothétique (2), le modèle tridimensionnel virtuel de la base prothétique (3) et le modèle tridimensionnel virtuel de la structure porteuse (4, 5, 14, 15) ;
F) après l'étape E), l'agencement ou la fixation de la structure porteuse (4, 5, 14, 15) sur la surface de liaison (20) du corps de fraisage (6, 16, 21) ;
G) après l'étape F), l'introduction d'au moins un matériau plastique polymérisable fluide sur les régions de la surface de liaison (20) et dans le volume retiré à l'étape E) dans la surface du corps de fraisage (6, 16, 21) ;
H) après l'étape G), le durcissement ou le durcissement partiel de l'au moins un matériau plastique polymérisable fluide, d'un matériau plastique durci résultant du durcissement ou d'un matériau plastique partiellement polymérisé résultant du durcissement partiel, le matériau plastique durci ou le matériau plastique partiellement polymérisé reliant entre eux la structure porteuse (4, 5, 14, 15) et le matériau du corps de fraisage (6, 16, 21) ; et
I) après l'étape H), l'usinage soustractif du matériau plastique durci ou partiellement polymérisé et du corps de fraisage (6, 16, 21) en utilisant une méthode FAO en conformité avec le modèle virtuel d'une surface extérieure de la prothèse dentaire partielle (1), de sorte que la prothèse dentaire partielle (1) comprenant la structure porteuse (4, 5, 14, 15), le matériau plastique durci ou partiellement polymérisé et le matériau du corps de fraisage (6, 16, 21) soit obtenue par usinage soustractif.

2. Procédé selon la revendication 1, **caractérisé en ce que**
la génération du modèle tridimensionnel virtuel de l'au moins une dent prothétique (2), du modèle tridimensionnel virtuel de la base prothétique (3) et du modèle tridimensionnel virtuel de la structure porteuse (4, 5, 14, 15) sur la base du modèle tridimensionnel virtuel de la prothèse dentaire partielle (1) à l'étape B1) est effectuée de sorte que le modèle tridimensionnel virtuel de l'au moins une dent prothétique (2), le modèle tridimensionnel virtuel de la base prothétique (3) et le modèle tridimensionnel virtuel de la structure porteuse (4, 5, 14, 15) aboutissent au modèle tridimensionnel virtuel de la prothèse dentaire partielle (1), lorsqu'ils sont combinés, ou
la génération du modèle tridimensionnel virtuel de l'au moins une dent prothétique (2) et du modèle tridimensionnel virtuel de la base prothétique (3) sur la base du modèle tridimensionnel virtuel de la prothèse dentaire partielle (1) sans la structure porteuse (4, 5, 14, 15) à l'étape B2) est effectuée de sorte que le modèle tridimensionnel virtuel de l'au moins une dent prothétique (2) et le modèle tridimensionnel virtuel de la base prothétique (3) aboutissent au modèle tridimensionnel virtuel de la prothèse dentaire partielle (1) sans la structure porteuse (4, 5, 14, 15) lorsqu'ils sont combinés.

3. Procédé selon la revendication 1 ou 2, **caractérisé en ce que**
à l'étape B2), un modèle tridimensionnel virtuel d'une structure porteuse (4, 5, 14, 15) est construit en utilisant la CAO, la construction CAO ayant lieu en appliquant un modèle tridimensionnel virtuel de la cavité buccale du patient et en appliquant le modèle tridimensionnel virtuel de la prothèse dentaire partielle (1) sans la structure porteuse (4, 5, 14, 15), et ce modèle tridimensionnel virtuel de la structure porteuse (4, 5, 14, 15) construit en utilisant la CAO étant utilisé à l'étape C1) pour fabriquer la structure porteuse (4, 5, 14, 15).

4. Procédé selon l'une quelconque des revendications précédentes, **caractérisé en ce que**
la structure porteuse (4, 5, 14, 15) est constituée ou est fabriquée à partir d'un matériau ayant une dureté et/ou une élasticité supérieures à celles du PMMA entièrement réticulé et/ou
la structure porteuse (4, 5, 14, 15) est fabriquée à partir d'un métal, d'une céramique, de l'acier inoxydable, du titane ou d'un alliage de titane.

5. Procédé selon l'une quelconque des revendications précédentes, **caractérisé en ce que**
à l'étape I), le matériau plastique durci ou partiellement polymérisé est soumis à un usinage soustractif en utilisant une méthode FAO de sorte que la structure porteuse (4, 5, 14, 15) soit partiellement exposée ou
à l'étape I), le matériau plastique durci ou partiellement polymérisé et le corps de fraisage (6, 16, 21) sont soumis à un usinage soustractif en utilisant une méthode FAO de sorte que la structure porteuse (4, 5, 14, 15) soit partiellement exposée.

6. Procédé selon l'une quelconque des revendications précédentes, **caractérisé en ce que**
après l'étape G) ou après l'étape H), une étape J) est effectuée au cours de laquelle le matériau plastique partiellement polymérisé subit un durcissement final, en particulier subit un durcissement final par photopolymérisation, et, après les étapes I) et J), le polissage de la surface de la prothèse dentaire partielle (1) et/ou la finition de surface de la prothèse dentaire partielle (1) sont de préférence réalisés.

7. Procédé selon l'une quelconque des revendications précédentes, **caractérisé en ce que**
une paroi circonférentielle (28) est agencée sur le corps de fraisage (6, 16, 21), la paroi circonférentielle (28) restant dans les étapes D) à G), de préférence, dans l'étape G), la paroi circonférentielle (28) entrant en contact avec l'au moins un matériau plastique polymérisable fluide, en particulier de préférence l'au moins un matériau plastique polymérisable fluide étant introduit sur la surface de liaison (20) et dans le volume retiré à l'étape E) dans la surface du corps de fraisage (6, 16, 21) de sorte que le niveau monte jusqu'à la paroi circonférentielle (28), mais reste en dessous de la paroi circonférentielle (28).

8. Procédé selon l'une quelconque des revendications précédentes, **caractérisé en ce que**
à l'étape G), l'au moins un matériau plastique polymérisable fluide est introduit sur la surface de liaison (20) et dans le volume retiré à l'étape E) dans le corps de fraisage (6, 16, 21) de sorte que l'au moins un matériau plastique polymérisable fluide relie le corps de fraisage usiné (6, 16, 21) à la structure porteuse (4, 5, 14, 15), l'au moins un matériau plastique polymérisable fluide mouillant de préférence complètement la surface de liaison (20) fabriquée à l'étape E) dans le corps de fraisage (6, 16, 21) à l'exception des points de la structure de support (17) couverts par la structure porteuse (4, 5, 14, 15) et/ou au moins le volume retiré à l'étape E) dans la surface du corps de fraisage (6, 16, 21) étant complètement rempli de l'au moins un matériau plastique polymérisable fluide, en particulier sans gaz emprisonné.

9. Procédé selon l'une quelconque des revendications précédentes, **caractérisé en ce que**
à l'étape I), l'usinage soustractif du matériau plastique durci ou partiellement polymérisé et du corps de fraisage (6, 16, 21) est effectué à partir de la direction de la face inférieure du corps de fraisage (6, 16, 21), qui est opposée à la surface du corps de fraisage (6, 16, 21) usiné à l'étape E), en utilisant la méthode FAO en conformité avec la surface occlusale et la surface orale du modèle virtuel de la prothèse dentaire partielle (1) et/ou
à l'étape I), l'usinage soustractif du matériau plastique durci ou partiellement polymérisé ou du matériau plastique durci ou partiellement polymérisé et du corps de fraisage (6, 16, 21) est effectué à partir de la direction de la surface du corps de fraisage (6, 16, 21) usiné à l'étape E), en utilisant la méthode FAO en conformité avec la surface basale du modèle virtuel de la prothèse dentaire partielle (1).

10. Procédé selon l'une quelconque des revendications précédentes, **caractérisé en ce que**
lors de la génération du modèle tridimensionnel virtuel de l'au moins une dent prothétique (2) à l'étape B1) ou B2), au moins un élément de retenue de la structure porteuse est prévu, l'au moins un élément de retenue étant espacé de l'au moins une dent prothétique et l'au moins un élément de retenue étant entouré par le matériau plastique durci après l'étape H), la structure porteuse (4, 5, 14, 15) comprenant de préférence au moins une cage (5, 15) pour la liaison aux dents (8) du patient, l'au moins une cage (5, 15) étant reliée à l'au moins un élément de retenue (4, 14).

11. Procédé selon l'une quelconque des revendications précédentes, **caractérisé en ce que**
après l'étape C1) ou C2) et avant l'étape F), la structure porteuse (4, 5, 14, 15) est prétraitée sur les surfaces qui sont appliquées à la surface de liaison (20) du corps de fraisage usiné (6, 16, 21), de préférence par rugosification, application d'un connecteur, nettoyage et/ou gravure chimique.

12. Procédé selon l'une quelconque des revendications précédentes, **caractérisé en ce que**
lors de l'usinage soustractif du matériau plastique durci ou partiellement polymérisé et du corps de fraisage (6, 16, 21) à l'étape I), un décalage est prévu par rapport à la structure porteuse (4, 5, 14, 15) pour espacer l'outil afin de mettre en œuvre la méthode FAO.

13. Prothèse dentaire partielle (1) fabriquée en utilisant un procédé selon l'une quelconque des revendications précédentes.

14. Dispositif de mise en œuvre d'un procédé selon l'une quelconque des revendications 1 à 12, le dispositif comprenant
un module de calcul de surface de liaison pour calculer une surface de liaison (20) entre l'au moins une dent prothétique (2) et une structure de support (17) afin de positionner la structure porteuse (4, 5, 14, 15) d'une part et la base prothétique (3) et la structure porteuse (4, 5, 14, 15) d'autre part en conformité avec un modèle tridimensionnel virtuel de la forme de la surface de liaison (20) de l'au moins une dent prothétique (2) par rapport à la base prothétique (3) et à la structure porteuse (4, 5, 14, 15) dans la prothèse dentaire partielle (1) ;
un module de commande de surface de liaison pour un dispositif FAO programmé pour commander la fabrication soustractive de la surface de liaison (20) calculée en utilisant le module de calcul de surface de liaison dans un corps de fraisage (6, 16, 21) ; et un module de commande de prothèse partielle pour un dispositif FAO programmé pour commander la fabrication soustractive de la surface de la prothèse dentaire partielle (1) à fabriquer en conformité avec le modèle virtuel d'une surface extérieure de la prothèse dentaire partielle (1).

15. Dispositif selon la revendication 14, **caractérisé en ce que**
le dispositif comprenant un module de calcul de structure porteuse, qui réalise le calcul d'une structure porteuse (4, 5, 14, 15) pour la liaison à une surface de liaison (20) du corps de fraisage (6, 16, 21) destiné à faire l'objet d'une fabrication soustractive, la structure porteuse (4, 5, 14, 15) pouvant être calculée de manière à former une pièce d'application qui s'ajuste à la surface de liaison (20), le module de commande de surface de liaison pour un dispositif FAO étant de préférence programmé pour commander la fabrication soustractive de la surface de liaison (20) dans le corps de fraisage (6, 16, 21) calculée par le module de calcul de surface de liaison et le module de calcul de structure porteuse.
